(19) Europäisches Patentamt
European Patent Office
Office européen des brevets

(11) EP 0 805 786 B1

(12) EUROPÄISCHE PATENTSCHRIFT

(45) Veröffentlichungstag und Bekanntmachung des Hinweises auf die Patenterteilung:
**04.11.1998 Patentblatt 1998/45**

(21) Anmeldenummer: **96900464.7**

(22) Anmeldetag: **24.01.1996**

(51) Int. Cl.$^6$: **C04B 7/147**, C04B 7/24, B01J 2/10, C22B 7/02

(86) Internationale Anmeldenummer:
**PCT/AT96/00009**

(87) Internationale Veröffentlichungsnummer:
**WO 96/22950 (01.08.1996 Gazette 1996/35)**

# (54) VERFAHREN ZUM VERWERTEN VON BEIM REDUZIEREN VON EISENERZ ANFALLENDEN STÄUBEN

METHOD OF UTILIZING DUSTS PRODUCED DURING THE REDUCTION OF IRON ORE

PROCEDE DE RECYCLAGE DE POUSSIERES PRODUITES LORS DE LA REDUCTION DE MINERAI DE FER

(84) Benannte Vertragsstaaten:
**AT BE DE FR GB IT LU NL SE**

(30) Priorität: **24.01.1995 AT 120/95**
**06.07.1995 AT 1149/95**

(43) Veröffentlichungstag der Anmeldung:
**12.11.1997 Patentblatt 1997/46**

(73) Patentinhaber:
- **VOEST-ALPINE INDUSTRIEANLAGENBAU GMBH**
  **4020 Linz (AT)**
  Benannte Vertragsstaaten:
  **AT**
- **DEUTSCHE VOEST-ALPINE INDUSTRIEANLAGENBAU GMBH**
  **40219 Düsseldorf (DE)**
  Benannte Vertragsstaaten:
  **BE DE FR GB IT LU NL SE**

(72) Erfinder:
- **GRÜNBACHER, Herbert**
  **4502 St. Marien (AT)**
- **SCHREY, Günter**
  **4040 Linz (AT)**
- **ZETTL, Franz**
  **81247 München (DE)**
- **ZETTL, Stefan**
  **81247 München (US)**

(74) Vertreter:
**Kopecky, Helmut, Dipl.-Ing.**
**Kopecky & Schwarz**
**Patentanwälte et al**
**Wipplingerstrasse 32/22**
**1010 Wien (AT)**

(56) Entgegenhaltungen:

| | |
|---|---|
| **EP-A- 0 623 684** | **EP-A- 0 676 478** |
| **DE-A- 2 459 750** | **DE-A- 3 014 952** |
| **DE-A- 3 640 794** | **DE-A- 3 926 195** |
| **DE-A- 4 205 096** | **DE-B- 1 247 926** |

- **CHEMICAL ABSTRACTS, vol. 105, no. 20, 17.November 1986 Columbus, Ohio, US; abstract no. 177471s, XP002001112 & JP,A,61 136 943 (KYOZAI KOGYO K.K.)**

EP 0 805 786 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Verwerten von beim Reduzieren von Eisenerz mit einem Reduktionsgas anfallenden und hierbei in einem Wäscher in Form von Schlämmen abgeschiedenen Stäuben.

Bei einem Verfahren dieser Art, beispielsweise bekannt aus der AT-B - 376.241, werden das Reduktionsgas nach einer Feststoffabscheidung sowie das aus der Direktreduktionszone austretende Topgas in Zyklonen einer Gaswäsche unterzogen. Um die bei der Gaswäsche abgeschiedenen Schlämme nutzbringend zu verwerten, werden die Schlämme mit Bindemittel, gebildet von Eisenoxidstaub, Hartpech, Bitumen oder bituminöser Braunkohle, versetzt, heiß brikettiert und der Einschmelzvergasungszone zugeführt, wobei der Eisenoxidstaub aus einer Gichtgasreinigungsanlage stammt.

Die bei der Feststoffabscheidung anfallenden Feststoffe - in der Hauptsache Staubkohle - werden nahezu zur Gänze in den unteren Bereich der Einschmelzvergasungszone rückgeführt; ein geringer Teil der Staubkohle wird mit den mit Bindemittel versetzten Schlämmen vermischt und gemeinsam mit diesen brikettiert.

Nachteilig ist jedoch hierbei, daß infolge des erhöhten Einbringens von Eisenoxiden im Einschmelzvergaser Reduktionsarbeit geleistet werden muß, um das Eisenoxid zu reduzieren, wodurch für den Einschmelzvorgang benötigte Energie diesem entzogen wird und eine Störung des in der Einschmelzvergasungszone ablaufenden Prozesses stattfindet. Weiters stellt die genannte Heißbrikettierung im Hinblick auf die Investitions- und Betriebskosten eine aufwendige Lösung dar.

Aus der DE-A - 41 23 626 ist es bekannt, Hüttenreststoffe zu agglomerieren, u.zw. unter Zuhilfenahme von Bindemitteln, Schlackenbildnern und Reduktionsmitteln, und die Agglomerate in den oberen Möllerbereich eines Schmelzaggregates einzubringen, wobei die Vorwärmung und Trocknung der Agglomerate in diesem Möllerbereich des Schmelzaggregates erfolgt. Der Möller durchsetzt das Schmelzaggregat nach dem Gegenstromprinzip, wobei er zunächst in einen im Inneren des Schmelzaggregates vorgesehenen Reduktionsbereich gelangt und anschließend im unteren Bereich des Schmelzaggregates geschmolzen wird. Dieses bekannte Verfahren ist insofern energieaufwendig, als die Abfall- bzw. Reststoffe im Schmelzaggregat getrocknet und gesintert werden müssen und so den im Schmelzaggregat stattfindenden Prozeß negativ beeinflussen.

Auch hier muß infolge des Einbringens von Eisenoxiden (wie z.B. Zunder) im Einschmelzvergaser Reduktionsarbeit geleistet werden, wozu ein weiterer, erheblicher Energieaufwand notwendig ist. Weiters wird vorgeschlagen, als Bindemittel z.B. Sulfitablaugen einzusetzen, was jedoch zu einem unerwünschten Schwefeleintrag in den Prozeß führt.

Die Erfindung bezweckt die Vermeidung dieser Nachteile und stellt sich die Aufgabe, die bei einer Reduktion von Eisenerz anfallenden Schlämme ohne Störung des Prozeßablaufes der Reduktion nutzbringend zu verwerten, wobei ein zusätzlicher Energieaufwand so gering wie möglich gehalten wird. Weiters soll eine nutzbringende Verwertung auch dann möglich sein, wenn Schwermetallverbindungen in den Schlämmen vorhanden sind, wobei jedoch eine Deponielegung, die bisher bei der Verwertung solcher Schlämme bei der Herstellung von Eisenschmelzen zwecks Verhinderung der Aufschaukelung des Gehaltes an solchen Schwermetallverbindungen erforderlich war, vermieden werden kann.

Diese Aufgabe wird erfindungsgemäß dadurch gelöst, daß die Schlämme entwässert und als Ausgangsmaterial für die Zementherstellung eingesetzt werden.

Aus der EP-A - 0 124 038 ist es bekannt, Zementmaterial aus Industrieschlämmen hauptsächlich organischer oder anorganischer Zusammensetzung herzustellen. Hierbei werden die Schlämme nicht näher definierter Zusammensetzung (inklusive kommunaler Abwässer) mit Zementmaterial in Pulverform gemischt, anschließend granuliert oder pelletisiert. Es werden im Hinblick auf den späteren Einsatz in der Zementindustrie die für die Zementzusammensetzung wesentlichen Zementkomponenten erst zugesetzt. Es findet also eine Beimischung von als Zementkomponenten geeignet erscheinenden Stoffen zu den verschiedensten als Zementersatz bzw. Additiv eingesetzten Schlämmen mit dem Ziel statt, ein für die Zementindustrie geeignetes Klinkerprodukt zu erhalten. Dieses wird anschließend unter Zusatz von Kalziumkarbonat granuliert.

Demgegenüber ergibt sich durch die Erfindung eine wesentliche Vereinfachung des Produktionsablaufes, da die erfindungsgemäß für die Zementherstellung eingesetzten Schlämme bereits die vier Grundkomponenten des Zementmaterials, nämlich Eisenoxide, Siliziumoxid, Aluminiumoxid und Kalziumoxid, enthalten und nicht erst gesondert hinzugegeben werden müssen.

Es ist von besonderem Vorteil, wenn die Schlämme vor der Weiterverarbeitung auf einen Restfeuchtegehalt von 25 bis 50 %, vorzugsweise 35 bis 40 %, entwässert werden. Hierdurch ergibt sich eine leichtere Handhabbarkeit der Schlämme für die weitere Verarbeitung.

Eine bevorzugte Ausführungsform der Erfindung ist dadurch gekennzeichnet,

- daß die Schlämme zunächst auf einen Restfeuchtegehalt entwässert werden,
- daß die Schlamme anschließend granuliert werden und
- daß das so gebildete Granulat als Ausgangsmaterial für die Zementherstellung eingesetzt wird.

Hierbei werden vorteilhaft nach dem Entwässern

den Schlämmen als Bindemittel Branntkalk sowie gegebenenfalls Kohlestaub zugesetzt und wird danach granuliert. Vorzugsweise werden hierbei die Schlämme vor einer Weiterbehandlung auf einen Restfeuchtegehalt von 25 bis 50 %, vorzugsweise 35 bis 40 %, entwässert. Hierdurch kann ein diesen Restfeuchtegehalt aufweisender Schlamm direkt in einen Mischgranulator aufgegeben werden. Der bevorzugte Bereich des Restfeuchtegehalts hat einen mengenmäßig günstigen Verbrauch an Branntkalk zur Folge. Ohne eine solche Entwässerung wäre zur Erzielung einer ausreichenden Granulatfestigkeit ein wesentlich höherer Verbrauch an Branntkalk notwendig.

Das erfindungsgemäße Verfahren ist insbesondere zum Aufarbeiten von Schlämmen geeignet, die beim Reduzieren von Eisenerz mit Hilfe eines durch ein Kohlevergasungsverfahren hergestellten Reduktionsgases anfallen. Bei der Aufbereitung der bei der Kohlevergasung eingesetzten Kohle fällt Kohlefilterstaub an, der dann den Schlämmen zusammen mit dem Bindemittel Branntkalk zugesetzt werden kann, so daß der Zusatz des Kohlestaubes keine Zusatzkosten verursacht, sondern, im Gegenteil, eine kostengünstige Verwertung des sonst anderwertig zu verwertenden Kohlestaubes ermöglicht. In diesem Sinne bietet sich das erfindungsgemäße Verfahren besonders vorteilhaft zur Verwertung von Schlämmen an, wie sie beispielsweise bei Verfahren gemäß der AT-B - 376.241 und der AT-B - 370.134, bei denen eine Kohlevergasung vorgesehen ist, anfallen.

Zweckmäßig wird erfindungsgemäß das Granulat zu für die Zementherstellung eingesetztem Rohmehl gemahlen, getrocknet und anschließend gebrannt.

Hierbei ist es vorteilhaft, wenn das Granulat mit für die Zementherstellung erforderlichen Mineralstoffen, wie Kalkstein, Ton, etc., vermischt und der so gebildete Klinkeransatz gemahlen, getrocknet und anschließend gebrannt wird.

Zweckmäßig wird den entwässerten Schlämmen Kohlestaub in einer Menge von bis zu 30 %, vorzugsweise bis zu 25 %, der entwässerten Schlammenge zugesetzt. Kohlestaub in der genannten Menge hat einen positiven Einfluß auf die Festigkeit der Granulate. Hierbei hat die Verwendung von Kohlestaub aus Entstaubungseinrichtungen einer Kohletrocknungsanlage, welche in das vorliegende Konzept zur Herstellung einer Eisenschmelze bzw. von Roheisen und/oder Stahlvorprodukten integriert ist, einen besonderen Vorteil, u.zw. aus Gründen des Umweltschutzes und der Vermeidung von Transport- und Deponiekosten für den Kohlestaub. Weiters hat das Beifügen des Kohlestaubs zum entwässerten Schlamm den Vorteil, daß die danach im Mischgranulator gebildeten Granulate einen beträchtlichen Kohlenstoffgehalt aufweisen, wobei der Kohlestaub einen wertvollen energetischen Beitrag beim Brennen der Granulate leistet.

Gemäß einer bevorzugten Ausführungsvariante werden die Schlämme nach dem Entwässern mit ihrer Restfeuchte als Ausgangsmaterial für die Zementherstellung eingesetzt und mit zur Zementherstellung dienendem Rohmehl vermischt. Diese Variante ist insbesondere dann von Interesse, wenn die erfindungsgemäß eingesetzten Schlämme nur einen geringen Prozentsatz der Menge des weiters zur Zementherstellung dienenden Rohmehls ausmachen. Es ist dann keine besondere Trocknung der Schlämme erforderlich, da durch das Zumischen der noch eine Restfeuchte, beispielsweise in der Größenordnung von 35 bis 40 %, aufweisenden Schlämme die Feuchte des insgesamt zur Zementherstellung eingesetzten Rohmaterials nur geringfügig erhöht wird.

Für Länder mit heißem Klima kann es von Vorteil sein, wenn die Schlämme nach dem Entwässern auf einen Restfeuchtegehalt auf Deponie gelegt oder direkt auf Deponie gepumpt werden, dort einem natürlichen Trockenvorgang unterworfen und anschließend, so wie sie sind, d.h. ohne Zusätze, als Ausgangsmaterial für die Zementherstellung eingesetzt werden, wobei zweckmäßig von der Deponie die jeweils oberste, zumindest weitgehendst trockene Schicht abgetragen wird und als Ausgangsmaterial für die Zementherstellung eingesetzt wird. Hierbei wird das aus dem auf Deponie gelegten Schlämmen versickernde Wasser aufgefangen und zurückgeleitet. Die jeweils oberste abgetrocknete Schicht des auf Deponie gelegten Materials kann mittels Bagger etc. abgetragen werden. Hierbei fällt diese abgetrocknete Schicht hauptsächlich in Stückform an, so daß sie für den weiteren Transport und die weitere Verarbeitung leicht handhabbar ist.

Zweckmäßig werden die entwässerten Schlämme gemeinsam mit dem zur Zementherstellung eingesetzten Rohmehl gemahlen, getrocknet und anschließend gebrannt.

Hierbei ist es vorteilhaft, wenn die entwässerten Schlämme mit den für die Zementherstellung erforderlichen Mineralstoffen, wie Kalkstein, Ton, etc., vermischt werden und der so gebildete Klinkeransatz gemahlen, getrocknet und anschließend gebrannt wird.

Eine bevorzugte Ausführungsvariante ist dadurch gekennzeichnet, daß bei einem Verfahren zum Herstellen einer Eisenschmelze, bei dem Eisenerz in einer Direktreduktionszone zu Eisenschwamm reduziert, der Eisenschwamm in eine Einschmelzvergasungszone unter Zufuhr von kohlenstoffhältigem Material unter Vergasung des kohlenstoffhältigen Materials zu Reduktionsgas und unter Bildung von Schlacke eingeschmolzen wird und das Reduktionsgas in die Direktreduktionszone eingeleitet, dort umgesetzt und als Topgas abgezogen wird, das Reduktionsgas und/oder das Topgas einer Wäsche unterzogen werden und die bei der Wäsche abgeschiedenen Schlämme, gegebenenfalls nach Granulieren, als Ausgangsmaterial für die Zementherstellung eingesetzt werden. Selbstverständlich ist es jedoch auch möglich, das erfindungsgemäße Verfahren auch dann zur Anwendung zu bringen, wenn das Reduktionsgas nicht durch

Kohlevergasung gebildet wird, sondern beispielsweise aus Erdgas hergestellt wird.

Die Erfindung betrifft weiters ein Verfahren zum Granulieren der erfindungsgemäß zu verarbeitenden Schlämme.

Bei heute bekannten Granulier-Verfahren wird z.B. in diskontinuierlichen Granulatoren oder in Pelletiermaschinen mit hohem apparativem und kommerziellem Aufwand eine Stückigmachung erreicht. Aus der Praxis ist bekannt, daß oftmals aus ökonomischen Gründen auf eine Wiederverwertung mit Hilfe derartiger Systeme verzichtet wird, da eine Deponierung kostengünstiger ist. Da die zu verwertenden Schlämme und Staube bei der Reduktion von Eisenerz mit Reduktionsgas kontinuierlich in großen Mengen anfallen, kommt ökonomischen Gesichtspunkten bei der Verwertung der Schlämme bzw. Stäube große Bedeutung zu.

Die DE-A - 32 44 123 zeigt bereits eine Vorrichtung zum Herstellen eines Granulates aus Schlämmen, Kalk und Flugasche, wobei diese Komponenten in einem Rührwerk gemischt und granuliert werden. Es handelt sich um ein einstufiges diskontinuierliches Verfahren.

Die DE-A - 29 43 558 zeigt ebenfalls eine einstufige Granulierung, wobei der Schlamm zuerst einer Entwässerung zugeführt wird, anschließend in einem Mischgranulator unter Beifügung von trockenem Granulat, Stäuben und Flugasche gemischt und granuliert und über einen Trockner ausgetragen wird.

Der Erfindung liegt daher weiters die Aufgabe zugrunde, ein Granulationsverfahren für Schlämme der eingangs beschriebenen Art sowie eine Anlage zur Durchführung des Verfahrens zu schaffen, welche eine Aufbereitung, d.h. Stückigmachung auch in großen Mengen anfallender Schlämme mit geringem apparativem und energetischem Aufwand ermöglichen, wobei jedoch die hergestellten Granulate den in der Zementindustrie gestellten hohen Anforderungen an Qualität (Festigkeit, Lagerfähigkeit, Schüttfähigkeit etc.) genügen.

Diese Aufgabe wird erfindungsgemäß dadurch gelöst, daß die Schlämme in einem kontinuierlichen Verfahren verarbeitet werden, u.zw. in einer ersten Prozeßstufe mit Branntkalk kontinuierlich gemischt und in einer daran anschließenden zweiten Prozeßstufe kontinuierlich granuliert werden. Wesentlich für das Verfahren ist die Zweistufigkeit, u.zw. erstens eine gute Mischung der Schlämme, um ein ideales Ausgangsmaterial für die in der zweiten Stufe kontinuierlich durchzuführende Granulierung zur Verfügung stellen zu können.

Gemäß einer bevorzugten Ausführungsvariante werden das Mischen durch Bewegen der Schlämme zusammen mit Branntkalk in einer Mischtrommel und das Granulieren durch Pelletieren mit mindestens einem Pelletierteller durchgeführt.

Eine andere zweckmäßige Verfahrensvariante ist dadurch gekennzeichnet, daß das Mischen durch Bewegen der Schlämme zusammen mit Branntkalk in einer Mischtrommel und das Granulieren durch Extrudieren des Mischgutes, insbesondere durch Extrudieren des Mischgutes durch eine Lochplatte durchgeführt wird.

Weiters kann es von Vorteil sein, wenn das Mischen durch Bewegen der Schlämme zusammen mit Branntkalk in einer Mischtrommel und das Granulieren durch Brikettieren durchgeführt werden.

Das Granulierverfahren wird gemäß einer weiteren Verfahrensvariante vorzugsweise so durchgeführt, daß die Schlämme während der Mischung in der ersten Prozeßstufe in einem fluidisierten turbulenten dreidimensionalen Bewegungszustand gehalten werden, vorzugsweise durch Rotation einer Mischwelle in einem als Mischtrommel ausgebildeten Mischreaktor, wobei die Schlämme die Mischtrommel der Länge nach, gegebenenfalls unter Rückstauen, kontinuierlich durchströmen und daß die Schlämme in der zweiten Prozeßstufe durch Schubmischen im Haufwerk granuliert werden, vorzugsweise in mindestens einer als Granuliertrommel ausgebildeten Granuliereinrichtung, in der die Schlämme mit Hilfe einer rotierenden Granulierwelle bewegt werden, wobei die Schlämme die Granuliertrommel in Langsrichtung kontinuierlich durchsetzen und währenddessen zunehmend Granulate gebildet werden.

Zweckmäßig werden während des Mischens der Schlämme zur Einstellung einer bestimmten Feuchte der Schlämme zusätzlich Flüssigkeit und/oder gegebenenfalls zusätzlich Stäube eingespeist.

Eine Anlage zur Durchführung des Verfahrens ist durch eine Mischtrommel sowie mindestens eine nachgeordnete Granuliertrommel gekennzeichnet.

Gemäß einer bevorzugten Ausführungsform ist die Mischtrommel mit einer sich zentral über die Länge der Mischtrommel erstreckenden und mit Mischschaufeln bestückten Mischwelle versehen und sind in der Mischtrommel zusätzlich drehangetriebene Messerköpfe, deren Rotationsbewegung unterschiedlich ist zur Rotationsbewegung der Mischschaufeln, vorgesehen.

Vorzugsweise ist die Granuliertrommel mit einer mit Granulierschaufeln versehenen Granulierwelle versehen, die sich zentral längs der Granuliertrommel erstreckt.

Eine bevorzugte Ausführungsform ist dadurch gekennzeichnet, daß die Mischwelle und die Granulierwelle mit mehreren an sich radial erstreckenden Schaufelarmen befestigten Misch- bzw. Granulierschaufeln versehen sind und daß in die Mischtrommel von außen und sich etwa radial zur Mischtrommel erstreckende Messer-Antriebswellen ragen, die in Längsrichtung der Mischtrommel zwischen den Schaufelarmen liegend angeordnet sind und jeweils einen Messerkopf mit mindestens einem sich von der Messer-Antriebswelle weg erstreckenden Messer tragen.

Hierbei sind zweckmäßig die Misch- bzw. Granulierschaufeln jeweils von einem Schaufelblatt gebildet, dessen Mittelachse - bei der Mischtrommel - gegenüber

dem zugehörigen Schaufelarm um einen Winkel β zwischen 20° und 60° und - bei der Granuliertrommel - um einen Winkel β', der um etwa 40 % geringer ist als β, nach vor, d.h. in Bewegungsrichtung, und nach oben geneigt ist.

Weiters ist hierbei zweckmäßig das Schaufelblatt bei radialer Projektion seiner Mittelachse zur Mischwelle bzw. Granulierwelle gegenüber der Mischwelle um einen Winkel α zwischen 20° und 60° und gegenüber der Granulierwelle um einen Winkel α', der um etwa 35 % geringer ist als α, geneigt angeordnet.

Um die Durchtrittsgeschwindigkeit der eingesetzten Materialien sicherzustellen, ist vorzugsweise in der Mischtrommel und gegebenenfalls in der Granuliertrommel nahe dem Austrittsende für die Schlämme bzw. Granulate jeweils ein Wehr vorgesehen, wobei die Durchtrittsgeschwindigkeit der eingesetzten Materialien in einfacher Weise einstellbar ist, wenn das Wehr höhenverstellbar ist.

Vorzugsweise liegt das Verhältnis des Innenvolumens der Mischtrommel zum Innenvolumen der Granuliertrommel in einem Bereich zwischen 0,3 und 0,7, es beträgt vorzugsweise etwa 0,5, und der Füllgrad der Mischtrommel liegt zwischen 30 % und 95 %, vorzugsweise zwischen 70 % und 85 %, wogegen der Füllgrad der Granuliertrommel zweckmäßig zwischen 15 und 75 %, vorzugsweise unter 40 %, liegt.

Zweckmäßig weist die Mischtrommel einen kleineren Durchmesser auf als die Granuliertrommel und ist die Mischwelle mit einer größeren Drehzahl antreibbar als die Granulierwelle.

Ausgezeichnete Granulierergebnisse lassen sich erzielen, wenn die Mischtrommel mit Froude-Zahlen größer als 1, vorzugsweise größer als 3, betrieben wird, und wenn weiters die Granuliertrommel mit Froude-Zahlen kleiner als 3 betrieben wird.

Eine zweckmäßige Ausführungsform zur Durchführung einer Granulierung ist gekennzeichnet durch eine Mischtrommel sowie mindestens einen nachgeordneten Pelletierteller.

Eine weitere vorteilhafte Ausführungsform ist gekennzeichnet durch eine Mischtrommel sowie mindestens einen nachgeordneten Extruder, vorzugsweise versehen mit einer Lochplatte, insbesondere eine Vakuumstrangpresse.

Es kann auch zweckmäßig sein, wenn eine Mischtrommel sowie mindestens eine nachgeordnete Brikettierpresse vorgesehen sind.

Die Erfindung ist nachfolgend anhand zweier in der Zeichnung dargestellter Ausführungsbeispiele näher erläutert, wobei die Fig. 1 und 2 in schematischer Darstellung jeweils eine Anlage zur Durchführung des erfindungsgemäßen Verfahrens nach jeweils einem Ausführungsbeispiel veranschaulichen. Ein Granulierverfahren für die beim Reduzieren von Eisenerz anfallenden Schlämme ist ebenfalls in der Zeichnung schematisch dargestellt, wobei Fig. 3 ein Flußdiagramm einer erfindungsgemäßen Anlage veranschaulicht. Fig. 4 zeigt einen Axialschnitt durch einen Mischer, Fig. 5 einen Schnitt quer zur Längsachse des Mischers gemäß der Linie V-V der Fig. 4. Die Fig. 6, 7 und 8 stellen Details des Mischers im Schnitt bzw. in Ansicht gemäß den Linien VI-VI, VII-VII und VIII-VIII der Fig. 5 dar. In Fig. 9 ist der Längsschnitt einer Granuliereinrichtung und in Fig. 10 ein Schnitt quer zur Längsachse der Granuliereinrichtung gemäß der Linie X-X der Fig. 9 gezeigt. Fig. 11 stellt ein Detail der Granuliereinrichtung im gemäß der Linie XI-XI der Fig. 10 geführten Schnitt dar. Die Fig. 12 bis 16 veranschaulichen weitere Ausführungsformen der Erfindung ebenfalls in schematischer Darstellung.

Gemäß Fig. 1 werden in eine als Schachtofen 1 ausgebildete Direktreduktionseinrichtung, d.h. in deren Direktreduktionszone 2, von oben über eine Zuleitung 3 stückige eisenoxidhältige Einsatzstoffe 4, wie stückiges Erz, gegebenenfalls zusammen mit ungebrannten Zuschlägen 5, chargiert. Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird, wobei in der Zuleitung 7 eine Gasreinigungs- und eine Gaskühlungseinrichtung 8, die als Wäscher ausgebildet ist, vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammelt sich unterhalb der Einschmelzvergasungszone 15 schmelzflüssiges Roheisen 16 und schmelzflüssige Schlacke 17, die über einen Abstich 18 abgestochen werden.

Die im Schachtofen 1 in der Direktreduktionszone 2 zu Eisenschwamm reduzierten stückigen Einsatzstoffe werden dem Einschmelzvergaser 6 über eine oder mehrere Leitungen 20 zugeführt, beispielsweise mittels Austragsschnecken. An dem oberen Teil des Schachtofens 1 schließt eine Ableitung 21 für das in der Direktreduktionszone 2 entstehende Topgas an. Dieses Topgas wird einer Gasreinigungseinrichtung 23, die ebenfalls als Wäscher ausgebildet ist, zugeleitet und steht danach über die Exportgasleitung 24 einer weiteren Verwendung zur Verfügung.

Die in den Wäschern 8 und 23 anfallenden Schlammwässer werden über Schlammwasser-Leitungen 25 und 26 einem Eindicker 27 und anschließend einer Entwässerungseinrichtung 28, vorzugsweise einer Dekanterzentrifuge 28, zugeführt, in der die Schlämme auf einen Restfeuchtegehalt von 25 bis 50 %, vorzugsweise von 35 bis 40 %, entwässert werden. Der entwässerte Schlamm wird einer Granulationseinrichtung 29, wie einem Mischgranulator 29, zugeführt.

In die Granulationseinrichtung 29 münden eine Branntkalk 30 zuführende Leitung 31 sowie eine Kohlefilterstaub, der aus einer Kohletrocknungsanlage 32 stammt, zuführende Leitung 33. Die in der Granulationseinrichtung 29 gebildeten Granulate werden über eine Fördereinrichtung 34 ausgetragen und unter Dach 35 gelagert. Die Granulate werden - vorzugsweise per Bahn 36 - zu einem Zementerzeuger transportiert und in weiterer Folge gemeinsam mit den als Zusatz-Ausgangsmaterial für die Zementherstellung dienenden Mineralstoffen 37, 38, wie Kalkstein, Ton, etc., gemischt und gemahlen. Hierzu werden vorzugsweise Walzenschüsselmühlen 39, die aus dem Stand der Technik bekannt sind, eingesetzt. Anschließend wird der gemahlene Klinkeransatz 40 mit der Abluft 43 des Brennofens 41, der vorzugsweise als Drehrohrofen ausgebildet ist, in einem Trockner 42 getrocknet und im Brennofen 41 gebrannt.

Erfindungsgemäß ist der Schlamm aus den Wäschersystemen 8 und 23 der Eisenherstellungsanlage ausschließlich anorganischer Natur. Die Trockensubstanz des Schlammes weist eine definierte Zusammensetzung auf, wobei neben Kohlenstoff als Hauptkomponenten die vier Zementklinker bildenden Oxide (CaO, $SiO_2$, $Fe_2O_3$, $Al_2O_3$) bereits vorhanden sind. Die Granulate bilden gemeinsam mit den weiters zugesetzten Mineralstoffen den Klinkeransatz, wobei die Granulate einen wesentlichen Bestandteil der Zementkomponenten bilden und nicht nur als Füllstoff bzw. Beimengung dienen. Der leicht basische pH-Wert, die Restfeuchtigkeit von ca. 20 % und die Korngröße der Granulate bedürfen im Hinblick auf die weiteren Verarbeitungsschritte, wie Mahlen und Vortrocknen mit Abluft des Brennofens 41, keiner Korrektur mehr.

Nachstehendes Ausführungsbeispiel erläutert die erfindungsgemäße Vorgangsweise:

In einer Anlage zum Reduzieren von Eisenerz mit Reduktionsgas fallen in Wäschern Schlämme an, welche auf einen Restfeuchtigkeitsgehalt von ca. 40 % teilentwässert und nach Zugabe von Kohlenstoffstaub aus Filtern von Entstaubungsanlagen mit Hilfe von Branntkalk granuliert werden.

Die Granulate haben einen durchschnittlichen Feuchtigkeitsgehalt von ca. 20 %, sie haben folgende typische Zusammensetzung (trocken):

| | |
|---|---|
| Kohlenstoff | ca. 40 % |
| Calciumoxid | ca. 23 % |
| Eisenoxide | ca. 20 % |
| Siliciumoxid | ca. 7 % |
| Aluminiumoxid | ca. 4 % |
| Metalloxide | Rest |

Die Granulate werden erfindungsgemäß einer Drehrohrofenanlage zur Herstellung von Zementklinker zugeführt.

Bei der Zementherstellung wird die Beziehung der vier klinkerbildenden Oxide durch den hydraulischen Modul (HM) beschrieben.

$$HM = \frac{CaO}{SiO_2 + Al_2O_3 + Fe_2O_3} = 1{,}7 - 2{,}3$$

Zemente guter Festigkeit haben einen hydraulischen Modul von ca. 2. Zemente mit HM < 1,7 weisen meistens ungenügende Festigkeit auf, bei HM > 2,3 sind die Zemente meist nicht volumenbeständig.

Bei einer roheisenerzeugenden Anlage mittlerer Größe mit einer Kapazität von ca. 80 t/h Roheisen fallen ca. 8 t/h Granulate (trocken) an.

Demgegenüber werden bei der Zementherstellung in einer Drehrohrofenanlage mittlerer Größe ca. 70 t/h Klinker gebrannt.

Ausgehend von einem hydraulischen Modul von 2 eines gegebenen Klinkeransatzes ergibt sich bei Zuführung der Granulate mit der angegebenen Zusammensetzung und in den angeführten Mengen ein hydraulischer Modul von ca. 1,9 (innerhalb der Schwankungsbreite).

Durch erhöhte Zufuhr von CaO zum Klinkeransatz kann, wenn erforderlich, der hydraulische Modul wieder dem Wert 2 angenähert werden.

Gemäß dem in Fig. 2 dargestellten Ausführungsbeispiel wird auf eine Granulation und damit auf das Zumischen eines Bindemittels, wie Branntkalk, verzichtet. Der auf eine bestimmte Restfeuchte, vorzugsweise im Bereich von 25 bis 50 %, insbesondere 35 bis 40 %, entwässerte Schlamm wird über eine Fördereinrichtung ausgetragen und gegebenenfalls nach einer Zwischenlagerung zu einem Zementerzeuger transportiert und in weiterer Folge gemeinsam mit den als Ausgangsmaterial für die Zementherstellung dienenden Mineralstoffen 37, 38, wie Kalkstein, Ton etc., gemischt und gemahlen.

Die Zumischung des entwässerten Schlammes kann hierbei feucht, d.h. mit der beim Entwässern erreichten Restfeuchte, oder im getrockneten Zustand des Schlammes erfolgen. Eine feuchte Zumischung ist insbesondere dann in Betracht zu ziehen, wenn eine besondere Trocknung des Schlammes zu energieaufwendig und zu umständlich durchzuführen wäre und wenn weiters der entwässerte Schlamm im Verhältnis zur Gesamtmenge des bei der Zementherstellung eingesetzten Materials nur einen geringen Prozentsatz ausmacht, denn in diesem Fall wird die Feuchte der Gesamtmenge nur geringfügig verändert.

Für Länder mit heißem und trockenem Klima könnten die entwässerten Schlämme auf Deponie gelegt werden und nach einer natürlichen Trocknung abgebaggert und gemeinsam mit dem zur Zementherstellung eingesetzten Rohmehl gemahlen, getrocknet und anschließend gebrannt werden.

Eine typische Zusammensetzung der Trockensubstanz eines beim Herstellen einer Eisenschmelze in

einer Direktreduktionszone mittels eines durch Kohlevergasung hergestellten Reduktionsgases anfallenden Schlammes ist nachstehend wiedergegeben:

| | |
|---|---|
| Kohlenstoff | ca. 45 % |
| Eisenoxide | ca. 25 % |
| Siliciumoxid | ca. 10 % |
| Aluminiumoxid | ca. 5 % |
| Calciumoxid | ca. 3 % |
| Metalloxide | Rest |

Die genannten Oxide stellen gleichzeitig die vier Hauptklinkerkomponenten dar, sodaß sich die Verwendung des entwässerten Schlammes für die Zementindustrie, d.h. die Zumischung des Schlammes zum zur Zementherstellung dienenden und im Zementwerk produzierten Rohmehl, in einfacher Weise und ohne besondere Rezepturänderungen zu erfordern, verwirklichen läßt.

Ist die Menge des Schlammes im Verhältnis zur im Zementwerk produzierten Menge an Rohmehl nur gering, ist überhaupt keine Änderung der Gesamtrezeptur notwendig; die Gehalte an den Hauptklinkerkomponenten liegen nach dem Zumischen des Schlammes in der Regel in der tolerierten Bandbreite. Sollte die Zugabe des Schlammes zum Rohmehl chargenweise, d.h. in größeren Zeitabständen in jeweils größeren Mengen erfolgen, ist die Zugabe von Mineralstoffen 37, 38, wie Kalkstein, Ton, etc., zur Konstanthaltung des hydraulischen Moduls des Mischgutes zweckmäßig.

Die Erfindung läßt sich im speziellen bei jenen Eisenherstellungsverfahren anwenden, bei denen das Reduktionsgas aus Kohlegas gebildet wird, da hierbei der für das erfindungsgemäße Verfahren notwendige Kohlestaub ohnehin als Nebenprodukt anfällt. Es ist jedoch grundsätzlich unerheblich, ob das Reduktionsgas in einem Einschmelzvergaser 6, wie oben beschrieben, oder in einem speziellen Kohlevergaser, der ausschließlich zur Erzeugung von Reduktionsgas dient, oder aus Erdgas gebildet wird. Auch ist es unerheblich, ob die Direktreduktion des Eisenerzes 4 im Wirbelschichtverfahren in einem oder in mehreren hintereinander angeordneten Wirbelschichtreaktoren oder, wie im Ausführungsbeispiel beschrieben, in einem Schachtofen 1 stattfindet.

Zum kostengünstigen Herstellen von Granulaten hoher Festigkeit als Ausgangsmaterial für die Zementindustrie bei geringem energetischem Aufwand wird wie folgt vorgegangen:

Zunächst wird, wie aus Fig. 3 ersichtlich, Schlamm 51 bzw. werden Schlämme 51 mit unterschiedlichem Wassergehalt, die zu einem Granulat 52 verarbeitet werden sollen, auf einen bestimmten Feuchtigkeitsgehalt eingestellt, u.zw. beispielsweise mit Hilfe eines Absetzbeckens 53 oder mittels eines Dekanters 54. Der Feuchtigkeitsgehalt der Schlämme 51 ist für das Granulierverfahren nur von untergeordneter Bedeutung.

Die Schlämme 51 werden sodann in einen Mischer 55, der als Mischtrommel ausgebildet ist, eingebracht, wobei ein Einfüllstutzen 56 an einem Endbereich der Mischtrommel 55 und ein Ausgangsstutzen 57 am gegenüberliegenden Endbereich der Mischtrommel 55 angeordnet sind. Es können zusätzlich Stäube 58 (Kohlestaub bzw. Mineralstoffe) in die Mischtrommel 55 dosiert werden. Über eine geeignete Feuchtemessung der jeweiligen Einsatzmaterialien kann mit Hilfe eines Regelkreises 59 Flüssigkeit, wie z.B. Wasser, über Düsen an geeigneter Stelle, vorzugsweise im ersten Drittel der Mischtrommel 55 - gesehen in Durchsatzrichtung der Einsatzmaterialien -, eingespritzt und so ein Feuchtegehalt zwischen 10 und 80 %, vorzugsweise kleiner oder gleich 40 %, eingestellt werden. Weiters wird in die Mischtrommel 55 Branntkalk als Bindemittel 30 kontinuierlich über einen eigenen Zulaufstutzen oder den Einfüllstutzen 56 dosiert, u.zw. in einem Massenverhältnis zwischen 0,2 bis 2 kg CaO/kg $H_2O$, vorzugsweise mit 0,6 kg CaO/kg $H_2O$, dosiert.

Die Mischtrommel 55 ist mit einer sich zentral und über die gesamte Länge der Mischtrommel 55 erstreckenden und an den Stirnseiten der Mischtrommel 55 außenseitig drehbar gelagerten und mit einem Motor M antreibbaren Mischwelle 61 versehen, an der sich radial nach außen erstreckende Schaufelarme 62 angeordnet sind. An den äußeren Enden der Schaufelarme 62 sind jeweils Mischschaufeln 63 befestigt, z.B. angeschweißt oder angeschraubt. Die Schaufelblätter der Mischschaufeln 63 sind selbstreinigend und reichen bis nahe an die Trommelwand 64 der Mischtrommel 55 und sind gegenüber den Schaufelarmen 63 geneigt angeordnet, u.zw. in Bewegungsrichtung nach vorne ansteigend. Ihre Mittelachse 65 schließt jeweils mit der Längsachse des zugehörigen Schaufelarmes 62 einen Winkel $\beta$, der zwischen 20 und 60° liegt, ein (vgl. Fig. 8).

Die radiale Projektion der Mittelachse 65 der Schaufelblätter gegen die Mittelachse 66 der Mischwelle 61 schließt mit der Mittelachse 66 der Mischwelle 61 einen Winkel $\alpha$, der ebenfalls zwischen 20 und 60° liegt, ein (vgl. Fig. 4).

Die Schaufelarme 62 sind in größeren Abständen voneinander angeordnet. Zwischen den Schaufelarmen 62 sind Messerköpfe 67 vorgesehen, deren Messer 68 etwa radial gerichtet sind zur Antriebswelle 69 der Messerköpfe 67. Die Antriebswellen 69 der Messerköpfe 67 erstrecken sich etwa radial durch die Trommelwand 70 in das Innere der Mischtrommel 55. Die Messerköpfe 67 sind jeweils mit eigenen Motoren M antreibbar und außerhalb des Trommelmantels 70 gelagert.

Durch das Zusammenwirken der Mischschaufeln 63 mit den Messerköpfen 67 werden die Einsatzmaterialien in kurzer Zeit homogen vermischt, wobei die Drehzahlen der Mischwelle 61 und der Messerköpfe 67 so gewählt werden, daß ein mechanisch erzeugtes dreidimensionales Wirbelbett entsteht, in dem die Einsatzmaterialien in fluidisiertem turbulentem Bewegungszustand gehalten werden. Die einzelnen Partikel haben daher einen hohen Freiheitsgrad,

wodurch sehr kurze Mischzeiten bei gleichzeitig hoher Mischgüte gewährleitset werden können.

Die Messerköpfe 67 rotieren mit Drehzahlen zwischen 500 und 5000 U/min, vorzugsweise mit Drehzahlen zwischen 1500 und 3000 U/min. Die Mischtrommel 55 wird mit Froude-Zahlen großer als 1, vorzugsweise größer als 3, betrieben, wobei die mittlere Verweilzeit der Partikel in der Mischtrommel 55 zwischen 30 und 300 s, beispielsweise bei 90 s, liegt. Die Verweilzeit ist durch die geeignete Wahl der Baulänge $L_1$ und des Durchmessers $D_1$ der Mischtrommel 55 sowie durch eine geeignete Wahl des Verhältnisses Füllgrad zu Volumensstrom gewährleistet.

Vorzugsweise ist in der Mischtrommel 55 knapp vor dem Austrittsstutzen 57 ein Wehr 71 vorgesehen, welches bevorzugt höhenverstellbar ist. Somit kann auch durch das Wehr 71 die mittlere Verweilzeit bzw. der gewünschte Füllgrad gewährleistet bzw. eingestellt werden.

Zur Erzielung einer ausreichenden Mischgüte ist mindestens eine Verweilzeit von 45 s, vorzugsweise von mindestens 60 s, erforderlich. Dies kann durch eine geeignete Anordnung eines Zulaufstutzens für das Bindemittel 30 sichergestellt werden, sofern das Bindemittel 30 nicht über den Einfüllstutzen 56 für den Schlamm 51 eingebracht wird. Der Füllgrad der Mischtrommel 55 ist vorteilhaft auf Werte zwischen 30 und 95 %, vorzugsweise auf Werte zwischen 70 und 85 %, einzustellen.

Innerhalb der Mischtrommel 55 kommt es durch den Branntkalk 30 spontan zu einer stark exothermen Reaktion mit Wasser zu Calciumhydroxid:

$$CaO + H_2O \rightarrow Ca(OH)_2.$$

Ein Teil des zunächst im Schlamm 51 vorhandenen Wassers wird hierdurch chemisch gebunden, das Calciumoxid quillt. Der Löschkalk besitzt die Eigenschaft eines Hydrogels, dessen Kolloideigenschaften für den Granulierprozeß wichtig sind. Durch das Bindemittel 30 und das vorhandene Wasser entstehen in einer ersten Phase aufgrund der Kapillarkräfte Flüssigkeitsbrücken. Mit der chemischen Reaktion des Bindemittels 30 härtet dieses aus und verfestigt sich, so daß Feststoffbrücken gebildet werden, welche eine hohe Festigkeit aufweisen.

Beim Kalklöschen entsteht eine hohe Reaktionswärme, die zur Verdampfung von Wasser führt. Durch das Anlagern von Wasser an den Branntkalk sowie aufgrund der Verdampfung wird der freie Wasseranteil des Schlammes 51 auf unter 25 %, typischerweise unter 20 % kg $H_2O$/kg Einsatzmaterialien reduziert.

Die eigentliche Granulierung findet erst in der zweiten Prozeßstufe statt, u.zw. in der in Flußrichtung der Einsatzstoffe der Mischtrommel 55 nachgeordneten Granuliereinrichtung 72, die von einer Granuliertrommel gebildet ist (Fig. 9 bis 11). Im Inneren der Granuliertrommel 72 erstreckt sich zentral eine an den Enden der Granuliertrommel 72 gelagerte Granulierwelle 73, die mittels eines eigenen Motors M antreibbar ist.

An der Granulierwelle 73 sind Schaufelarme 74, die sich radial nach außen erstrecken, befestigt. Diese Schaufelarme 74 tragen Granulierschaufeln 75, die ähnlich gestaltet sind wie die Mischschaufeln 63. Die Granulierschaufeln 75 weisen ebenfalls Schaufelblätter auf, deren Mittelachsen 76 gegenüber den zugehörigen Schaufelarmen 74 (d.h. deren Längserstreckung) mit einem Winkel $\beta'$, der um etwa 40 % geringer ist als der Winkel $\beta$, nach vor, d.h. in Bewegungsrichtung, und nach oben geneigt sind. Bei jeweils radialer Projektion der Mittelachsen 76 der Schaufelblätter zur Mittelachse 77 der Granulierwelle 73 ergibt sich ein Neigungswinkel $\alpha'$ zwischen der Projektion der Mittelachse 76 der Schaufelblätter und der Mittelachse 77 der Granulierwelle, der um etwa 35 % geringer ist als der Winkel $\alpha$ bei der Mischtrommel 55.

In der Granuliertrommel 72 sind keine Messerköpfe 67 vorgesehen. Das Einsatzmaterial wird hier ruhiger geführt, u.zw. erfolgt hier ein Schubmischen im Haufwerk. Hierunter ist folgendes zu verstehen: Das schon mit etwas festerer Konsistenz in die Granuliertrommel 72 gelangende Einsatzmaterial bildet in der Granuliertrommel 72 ein Haufwerk, das von den Granulierschaufeln 74 durchsetzt, d.h. durchgearbeitet wird. Die Granulierschaufeln 74 schieben sich durch das Haufwerk, und die Partikel werden hierdurch zueinander geführt, so daß ein Aufbau eines Granulates 52 durch die zwischen den Partikeln wirkenden Kräfte stattfinden kann.

Die Drehzahl der Granulierwelle 73 wird so gewählt, daß ein ständiges wiederholtes Abrollen des Produktes an der Trommelwandung 78 zur Aufbauagglomeration führt. Die Partikelvergrößerung erfolgt aufgrund der Anlagerung (Schneeballeffekt).

In der Granuliertrommel 72, die ebenfalls mit einem Wehr 71 bestückt sein kann, ist es zur Bildung der Granulate 52 erforderlich, daß eine schonende Behandlung des Einsatzmaterials stattfindet. Erst dadurch können sich aus den beim Eingangsstutzen 79 bei der Granuliertrommel 72 noch Kleinen Granulatkeimen durch Zusammenfügen der Partikel Granulate 52 in der gewünschten Größe bilden. Die schonende Granulatbehandlung erfordert somit eine längere Verweilzeit der Einsatzmaterialien in der Granuliertrommel 72, wobei die Baulänge $L_2$ und der Durchmesser $D_2$ der Granuliertrommel 72 im Hinblick auf die Durchsatzleistung, die mittlere Verweilzeit und den Füllgrad ausgelegt sein müssen. Die Granuliertrommel 72 wird mit Froude-Zahlen kleiner als 3 betrieben. Die mittlere Verweilzeit in der Granuliertrommel 72 liegt zwischen 60 und 600 s, beispielsweise bei 120 s. Der Füllgrad liegt bei 15 bis 75, vorzugsweise bei weniger als 40 %.

In der Granuliertrommel 72 erfolgt Abbinden des Löschkalks. Mit Kohlendioxid aus der Luft sowie aufgrund der erhöhten Granulattemperatur durch die Löschreaktion entstehen sehr feste Granulate 52.

Durch den Einsatz von Branntkalk als Bindemittel

30 wird bei der Trocknung mit Temperaturen im Mischer 55 und in der Granuliereinrichtung 72 von bis zu ca. 120°C eine Krustenbildung vermindert. Die entstehenden Brüden werden sowohl im Mischer 55 als auch in der Granuliereinrichtung 72 über einen separaten Brüdenstutzen 80 und einen nicht dargestellten Brüdenkondensator abgeleitet.

Schaufeln 63 und 75 und Schaufelarme 62 und 74 sowohl der Mischtrommel 55 als auch der Granuliertrommel 72 sind entsprechend den Eigenschaften der eingesetzten Materialien in verschleiß- bzw. korrosionshemmenden Werkstoffen ausgeführt.

Das Verhältnis der Froude-Zahlen zwischen der Mischtrommel 55 und der Granuliertrommel 72 liegt zwischen 0,5 und 5. Dementsprechend sind die Umfangsgeschwindigkeiten und damit die Drehzahlen in Abhängigkeit vom Durchmesser $D_1$, $D_2$ der beiden Trommeln 55 bzw. 72 einzustellen.

Die Trennung der Verfahrensschritte in zwei Prozeßstufen Mischen/Reagieren in der Mischtrommel 55 einerseits und Agglomerieren in der Granuliertrommel 72 andererseits ermöglicht eine der Aufgabenstellung optimale Anpassung der apparativen Komponenten sowie der Prozeßbedingungen. Insbesondere können die Drehzahlen der Wellen 61 und 73 und somit die Froude-Zahlen, der Füllgrad und die Verweilzeit, die Schaufelanordnung und - geometrie sowie ihre Stellung zur Trommelwand 70 bzw. 78 für die Mischtrommel 55 und die Granuliertrommel 72 unabhängig voneinander eingestellt werden. Diese gegenüber einem einstufigen Verfahren zusätzlichen Freiheitsgrade ermöglichen es erst, die für eine Wiederverwendung in der Zementindustrie als Wertstoff unbedingt notwendige Qualität der Granulate 52 zu gewährleisten.

Alternativ zu der oben beschriebenen Ausführungsform, die in den Fig. 4 bis 11 dargestellt ist, gemäß der die Granulation in einer einzigen Granuliertrommel 72 mit einem gegenüber der Mischtrommel 55 wesentlich höheren Innenvolumen durchgeführt wird, könnten auch zwei oder mehrere Granuliertrommeln 72 von einer einzigen Mischtrommel 55 aus beschickt werden.

Statt einer getrennten Bauweise von Mischtrommel 55 und Granuliertrommel 72 besteht auch die Möglichkeit, beide in einer Einheit zu kombinieren, wie dies in den Fig. 12 und 13 veranschaulicht ist. Dabei sind Mischer 55 und Granuliereinrichtung 72 als Kompaktanlage ausgebildet, die von einer einstückigen Kombitrommel 81 gebildet ist. Die Kombitrommel 81 kann im Übergangsbereich zwischen Mischer 55 und Granuliereinrichtung 72 einen Durchmessersprung $\Delta D$ aufweisen, um den erforderlichen Verweilzeiten und Umfangsgeschwindigkeiten gerecht zu werden. Mischer 55 und Granuliereinrichtung 72 beinhalten eine gemeinsame Welle 61', an der die Werkzeuge 63, 75 angebracht sind. Der Vorteil dieser Varianten ist darin zu sehen, daß die Investitionskosten niedriger sind.

Zur zusätzlichen Verbesserung der Granulatform sowie ihrer Formstabilität und zur Erzielung eines engen Verstellungsspektrums kann zusätzlich zu den oben beschriebenen zweistufigen Vorrichtungen eine Rollierstufe 82 nachgeschaltet werden. Diese wird im wesentlichen aus einem horizontalen Drehrohr mit einer leichten Neigung zum Auslauf gebildet.

Gemäß der in Fig. 14 dargestellten Ausführungsform einer Granuliereinrichtung werden die Schlämme 51, das Bindemittel 30 und Zusätze 58, wie Kohlestaub, aus Vorratsbehältern 83 in einen Mischer 55 eingebracht, von dem sie auf mindestens einen Pelletierteller 84 aufgebracht werden, auf dem die eigentliche Granulierung stattfindet.

Gemäß der in Fig. 15 dargestellten Ausführungsform werden die Schlämme 51, die Zusätze 58 und das Bindemittel 30 ebenfalls in einem Mischer 55 gut durchmischt und anschließend in einen Extruder 85 eingebracht. Vorzugsweise wird als Extruder 85 eine Vakuumstrangpresse vorgesehen. Diese weist an einem Ende eine Lochplatte 86 auf, durch die die Schlämme unter Bildung dünner Stränge hindurchgepreßt werden. Durch Abbrechen der Stränge (infolge Schwerkraft) werden als Schüttgut zu handhabende Granulate gebildet.

Gemäß der in Fig. 16 dargestellten Ausführungsform erfolgt nach dem Mischen die Granulatbildung durch Brikettieren der gemischten Einsatzstoffe mittels einer Brikettierpresse 87.

Bei sämtlichen der in den Fig. 3 bis 16 dargestellten Ausführungsformen erfolgt das Granulieren kontinuierlich. Es wäre jedoch auch denkbar, die beim Reduzieren von Eisenerz mit Reduktionsgasen anfallenden Schlämme 51 diskontinuierlich zu granulieren, wobei die Schlämme 51 ebenfalls zuerst entwässert werden. Danach werden die Schlämme 51 in einen Zwischenbehälter gepumpt und gelangen von dort über eine Austragschnecke in einen Mischgranulator. Der Mischgranulator wird taktweise befüllt, beispielsweise in einem Halbstundentakt. In dem Mischgranulator erfolgt die Durchmischung der Schlämme 51 mit dem Bindemittel 30 und eventuellen Zusätzen 58, wobei zunächst die Zusätze und erst danach der Branntkalk 30 eingebracht werden. Nach Einbringen des Branntkalks 30 wird die Drehzahl des Mischgranulators zur Bildung der Granulate umgestellt, vorzugsweise herabgesetzt. Nach einer bestimmten Granulationszeit werden die Granulate ausgetragen und in einem Zwischenbehälter gelagert und von diesem über ein Förderband abgezogen und schließlich rolliert. Nach dem Austragen kann der Mischgranulator erneut befüllt werden.

**Patentansprüche**

1. Verfahren zum Verwerten von beim Reduzieren von Eisenerz mit einem Reduktionsgas anfallenden und hierbei in einem Wäscher in Form von Schlämmen abgeschiedenen Stäuben, dadurch gekennzeichnet, daß die Schlämme entwässert und als Ausgangsmaterial für die Zementherstellung eingesetzt werden.

**2.** Verfahren nach Anspruch 1, dadurch gekennzeichnet, daß die Schlämme vor der Weiterverarbeitung auf einen Restfeuchtegehalt von 25 bis 50 %, vorzugsweise 35 bis 40 %, entwässert werden.

**3.** Verfahren nach Anspruch 1 oder 2, dadurch gekennzeichnet,

- daß die Schlämme zunächst auf einen Restfeuchtegehalt entwässert werden,
- daß die Schlämme anschließend granuliert werden und
- daß das so gebildete Granulat als Ausgangsmaterial für die Zementherstellung eingesetzt wird.

**4.** Verfahren nach Anspruch 3, dadurch gekennzeichnet, daß nach dem Entwässern den Schlämmen als Bindemittel Branntkalk (30) sowie gegebenenfalls Kohlestaub zugesetzt werden und danach granuliert wird.

**5.** Verfahren nach Anspruch 3 oder 4, dadurch gekennzeichnet, daß das Granulat zu für die Zementherstellung eingesetztem Rohmehl gemahlen, getrocknet und anschließend gebrannt wird.

**6.** Verfahren nach einem oder mehreren der Ansprüche 3 bis 5, dadurch gekennzeichnet, daß das Granulat mit für die Zementherstellung erforderlichen Mineralstoffen (37, 38), wie Kalkstein, Ton, etc., vermischt und der so gebildete Klinkeransatz (40) gemahlen, getrocknet und anschließend gebrannt wird.

**7.** Verfahren nach einem oder mehreren der Ansprüche 3 bis 6, dadurch gekennzeichnet, daß den entwässerten Schlämmen Kohlestaub in einer Menge von bis zu 30 %, vorzugsweise bis zu 25 %, der entwässerten Schlammenge zugesetzt wird.

**8.** Verfahren nach Anspruch 1 oder 2, dadurch gekennzeichnet, daß die Schlämme nach dem Entwässern mit ihrer Restfeuchte als Ausgangsmaterial für die Zementherstellung eingesetzt werden und mit zur Zementherstellung dienendem Rohmehl vermischt werden.

**9.** Verfahren nach Anspruch 1 oder 2, dadurch gekennzeichnet, daß die Schlämme direkt auf Deponie gepumpt oder nach dem Entwässern auf einen Restfeuchtegehalt auf Deponie gelegt, dort einem natürlichen Trockenvorgang unterworfen und anschließend, so wie sie sind, als Ausgangsmaterial für die Zementherstellung eingesetzt werden.

**10.** Verfahren nach Anspruch 9, dadurch gekennzeichnet, daß von der Deponie die jeweils oberste, zumindest weitgehendst trockene Schicht abgetragen wird und als Ausgangsmaterial für die Zementherstellung eingesetzt wird.

**11.** Verfahren nach einem oder mehreren der Ansprüche 8 bis 10, dadurch gekennzeichnet, daß die entwässerten Schlämme gemeinsam mit dem zur Zementherstellung eingesetzten Rohmehl gemahlen, getrocknet und anschließend gebrannt werden.

**12.** Verfahren nach Anspruch 11, dadurch gekennzeichnet, daß die entwässerten Schlämme mit den für die Zementherstellung erforderlichen Mineralstoffen, wie Kalkstein, Ton, etc., vermischt werden und der so gebildete Klinkeransatz gemahlen, getrocknet und anschließend gebrannt wird.

**13.** Verfahren nach einem oder mehreren der Ansprüche 1 bis 12, dadurch gekennzeichnet, daß bei einem Verfahren zum Herstellen einer Eisenschmelze, bei dem Eisenerz (4) in einer Direktreduktionszone (2) zu Eisenschwamm reduziert, der Eisenschwamm in eine Einschmelzvergasungszone (15) unter Zufuhr von kohlenstoffhältigem Material unter Vergasung des kohlenstoffhältigen Materials zu Reduktionsgas und unter Bildung von Schlacke (17) eingeschmolzen wird und das Reduktionsgas in die Direktreduktionszone (2) eingeleitet, dort umgesetzt und als Topgas abgezogen wird, das Reduktionsgas und/oder das Topgas einer Wäsche unterzogen werden und die bei der Wäsche abgeschiedenen Schlämme, gegebenenfalls nach Granulieren, als Ausgangsmaterial für die Zementherstellung eingesetzt werden.

**14.** Verfahren nach einem oder mehreren der Ansprüche 1 bis 13, dadurch gekennzeichnet, daß die Schlämme (51) in einem kontinuierlichen Verfahren verarbeitet werden, u.zw. in einer ersten Prozeßstufe mit Branntkalk (30) kontinuierlich gemischt und in einer daran anschließenden zweiten Prozeßstufe kontinuierlich granuliert werden.

**15.** Verfahren nach Anspruch 14, dadurch gekennzeichnet, daß das Mischen durch Bewegen der Schlämme (51) zusammen mit Branntkalk (30) in einer Mischtrommel und das Granulieren durch Pelletieren mit mindestens einem Pelletierteller (84) durchgeführt werden (Fig. 14).

**16.** Verfahren nach Anspruch 14, dadurch gekennzeichnet, daß das Mischen durch Bewegen der Schlämme (51) zusammen mit Branntkalk (30) in einer Mischtrommel und das Granulieren durch Extrudieren des Mischgutes, insbesondere durch Extrudieren des Mischgutes durch eine Lochplatte

(86) durchgeführt wird (Fig. 15).

**17.** Verfahren nach Anspruch 14, dadurch gekennzeichnet, daß das Mischen durch Bewegen der Schlämme zusammen mit Branntkalk in einer Mischtrommel und das Granulieren durch Brikettieren durchgeführt werden (Fig. 16).

**18.** Verfahren nach Anspruch 14, dadurch gekennzeichnet, daß die Schlämme (51) während der Mischung in der ersten Prozeßstufe in einem fluidisierten turbulenten dreidimensionalen Bewegungszustand gehalten werden, vorzugsweise durch Rotation einer Mischwelle (61, 61') in einem als Mischtrommel (55) ausgebildeten Mischreaktor, wobei die Schlämme (51) die Mischtrommel (55) der Länge nach, gegebenenfalls unter Rückstauen, kontinuierlich durchströmen, und daß die Schlämme (51) in der zweiten Prozeßstufe durch Schubmischen im Haufwerk granuliert werden, vorzugsweise in mindestens einer als Granuliertrommel (72) ausgebildeten Granuliereinrichtung, in der die Schlämme mit Hilfe einer rotierenden Granulierwelle (73) bewegt werden, wobei die Schlämme die Granuliertrommel (72) in Längsrichtung kontinuierlich durchsetzen und währenddessen zunehmend in Granulate (52) geformt werden (Fig. 3 bis 13).

**19.** Verfahren nach einem oder mehreren der Ansprüche 14 bis 18, dadurch gekennzeichnet, daß während des Mischens der Schlämme (51) zur Einstellung einer bestimmten Feuchte der Schlämme (51) zusätzlich Flüssigkeit und/oder gegebenenfalls zusätzlich Stäube (58) eingespeist werden.

**20.** Anlage zur Durchführung des Verfahrens nach einem oder mehreren der Ansprüche 14 oder 18 oder 19, gekennzeichnet durch eine Mischtrommel (55) sowie mindestens eine nachgeordnete Granuliertrommel (72) (Fig. 3 bis 13).

**21.** Anlage nach Anspruch 20, dadurch gekennzeichnet, daß die Mischtrommel (55) mit einer sich zentral über die Länge der Mischtrommel (55) erstreckenden und mit Mischschaufeln (63) bestückten Mischwelle (61, 61') versehen ist und daß in der Mischtrommel (55) zusätzlich drehangetriebene Messerköpfe (67), deren Rotationsbewegung unterschiedlich ist zur Rotationsbewegung der Mischschaufeln (63), vorgesehen sind.

**22.** Anlage nach Anspruch 20 oder 21, dadurch gekennzeichnet, daß die Granuliertrommel (72) mit einer mit Granulierschaufeln (75) versehenen Granulierwelle (73, 61') versehen ist, die sich zentral längs der Granuliertrommel (72) erstreckt.

**23.** Anlage nach Anspruch 22, dadurch gekennzeichnet, daß die Mischwelle (61, 61') und die Granulierwelle (73, 61') mit mehreren an sich radial erstreckenden Schaufelarmen (62, 74) befestigten Misch- bzw. Granulierschaufeln (63, 75) versehen sind und daß in die Mischtrommel (55) von außen und sich etwa radial zur Mischtrommel (55) erstrekkende Messer-Antriebswellen (69) ragen, die in Längsrichtung der Mischtrommel (55) zwischen den Schaufelarmen (62) liegend angeordnet sind und jeweils einen Messerkopf (67) mit mindestens einem sich von der Messer-Antriebswelle weg erstreckenden Messer (68) tragen.

**24.** Anlage nach Anspruch 23, dadurch gekennzeichnet, daß die Misch- bzw. Granulierschaufeln (63, 75) jeweils von einem Schaufelblatt gebildet sind, dessen Mittelachse (65) - bei der Mischtrommel (55) - gegenüber dem zugehörigen Schaufelarm (62) um einen Winkel $\beta$ zwischen 20° und 60° und - bei der Granuliertrommel (72) - um einen Winkel $\beta'$, der um etwa 40 % geringer ist als $\beta$, nach vor, d.h. in Bewegungsrichtung, und nach oben geneigt ist.

**25.** Anlage nach Anspruch 24, dadurch gekennzeichnet, daß das Schaufelblatt bei radialer Projektion seiner Mittelachse (65) zur Mischwelle (61) bzw. Granulierwelle (73) gegenüber der Mischwelle (61) um einen Winkel $\alpha$ zwischen 20° und 60° und gegenüber der Granulierwelle (73) um einen Winkel $\alpha'$, der um etwa 35 % geringer ist als $\alpha$, geneigt angeordnet ist.

**26.** Anlage nach einem oder mehreren der Ansprüche 20 bis 25, dadurch gekennzeichnet, daß in der Mischtrommel (55) und gegebenenfalls in der Granuliertrommel (72) nahe dem Austrittsende für die Schlämme (51) bzw. Granulate (52) jeweils ein Wehr (71) vorgesehen ist.

**27.** Anlage nach Anspruch 26, dadurch gekennzeichnet, daß das Wehr (71) höhenverstellbar ist.

**28.** Anlage nach einem oder mehreren der Ansprüche 20 bis 27, dadurch gekennzeichnet, daß das Verhältnis des Innenvolumens der Mischtrommel (55) zum Innenvolumen der Granuliertrommel (72) in einem Bereich zwischen 0,3 und 0,7 liegt, vorzugsweise etwa 0,5 beträgt.

**29.** Anlage nach einem oder mehreren der Ansprüche 20 bis 28, dadurch gekennzeichnet, daß der Füllgrad der Mischtrommel (55) zwischen 30 % und 95 %, vorzugsweise zwischen 70 % und 85 % liegt.

**30.** Anlage nach einem oder mehreren der Ansprüche 20 bis 29, dadurch gekennzeichnet, daß der Füllgrad der Granuliertrommel (72) zwischen 15 und 75 %, vorzugsweise unter 40 % liegt.

**31.** Anlage nach einem oder mehreren der Ansprüche 20 bis 30, dadurch gekennzeichnet, daß die Mischtrommel (55) einen kleineren Durchmesser ($D_1$) aufweist als die Granuliertrommel (72).

**32.** Anlage nach einem oder mehreren der Ansprüche 20 bis 31, dadurch gekennzeichnet, daß die Mischwelle (61) mit einer größeren Drehzahl antreibbar ist als die Granulierwelle (73).

**33.** Anlage nach einem oder mehreren der Ansprüche 20 bis 32, dadurch gekennzeichnet, daß die Mischtrommel (55) mit Froude-Zahlen größer als 1, vorzugsweise größer als 3, betrieben wird.

**34.** Anlage nach einem oder mehreren der Ansprüche 20 bis 33, dadurch gekennzeichnet, daß die Granuliertrommel (72) mit Froude-Zahlen kleiner als 3 betrieben wird.

**35.** Anlage nach den Ansprüchen 33 und 34, dadurch gekennzeichnet, daß das Verhältnis der Froude-Zahlen, mit der die Mischtrommel (55) und mit der die Granuliertrommel (72) betrieben werden, zwischen 0,5 und 5 liegt.

**36.** Anlage zur Durchführung des Verfahrens nach Anspruch 15, gekennzeichnet durch eine Mischtrommel (55) sowie mindestens einen nachgeordneten Pelletierteller (84) (Fig. 14).

**37.** Anlage zur Durchführung des Verfahrens nach Anspruch 16, gekennzeichnet durch eine Mischtrommel (55) sowie mindestens einen nachgeordneten Extruder (85), vorzugsweise versehen mit einer Lochplatte (86), insbesondere eine Vakuumstrangpresse (Fig. 15).

**38.** Anlage zur Durchführung des Verfahrens nach Anspruch 17, gekennzeichnet durch eine Mischtrommel (55) sowie mindestens eine nachgeordnete Brikettierpresse (87) (Fig. 16).

**Claims**

**1.** A method of utilizing dusts incurring in the reduction of iron ore by means of a reducing gas and separated on that occasion in a scrubber in the form of sludges, characterized in that the sludges are dehydrated and used as starting materials for the production of cement.

**2.** A method according to claim 1, characterized in that the sludges are dehydrated to a residual moisture content of 25 to 50 %, preferably 35 to 40 %, prior to further processing.

**3.** A method according to claim 1 or 2, characterized in that

- the sludges at first are dehydrated to a residual moisture content,
- the sludges subsequently are granulated and
- the thus formed granulated material is used as a starting material for the production of cement.

**4.** A method according to claim 3, characterized in that quick lime (30) as a binder as well as optionally coal dust are added to the sludges after dehydration and granulation is effected afterwards.

**5.** A method according to claim 3 or 4, characterized in that the granulated material is ground to raw meal used for the production of cement, is dried and subsequently is burnt.

**6.** A method according to one or several of claims 3 to 5, characterized in that the granulated material is mixed with mineral substances (37, 38) required for the production of cement, such as limestone, clay, etc., and the thus prepared clinker formulation (40) is ground, dried and subsequently burnt.

**7.** A method according to one or several of claims 3 to 6, characterized in that coal dust is added to the dehydrated sludges in amounts of up to 30 %, preferably up to 25 %, of the amount of dehydrated sludge.

**8.** A method according to claim 1 or 2, characterized in that the sludges, after dehydration, with their residual moisture are used as starting materials for the production of cement and are mixed with raw meal serving for the production of cement.

**9.** A method according to claim 1 or 2, characterized in that the sludges are directly pumped onto a dumping ground or are dumped after dehydration to a residual moisture content, there are subjected to a natural drying procedure and subsequently are used as such as starting materials for the production of cement.

**10.** A method according to claim 9, characterized in that the respectively uppermost layer, which has dried at least to the major extent, is taken away from the dumping ground and is used as a starting material for the production of cement.

**11.** A method according to one or several of claims 8 to 10, characterized in that the dehydrated sludges are ground, dried and subsequently burnt, together with the raw meal used for the production of

cement.

**12.** A method according to claim 11, characterized in that the dehydrated sludges are mixed with the mineral substances required for the production of cement, such as limestone, clay, etc., and the thus prepared clinker formulation is ground, dried and subsequently burnt.

**13.** A method according to one or several of claims 1 to 12, characterized in that, in a process for the production of an iron melt, in which iron ore (4) is reduced to sponge iron in a direct reduction zone (2), the sponge iron is melted in a melting gasifying zone (15) under supply of carbon-containing material while gasifying the carbon-containing material to reducing gas and under formation of slag (17), and the reducing gas is injected into the direct reduction zone (2), is reacted there and is drawn off as a top gas, the reducing gas and/or the top gas are subjected to scrubbing and the sludges separated during scrubbing, optionally after granulation, are used as starting materials for the production of cement.

**14.** A method according to one or several of claims 1 to 13, characterized in that the sludges (51) are processed in a continuous process, i.e., are continuously mixed with quick lime (30) in a first process stage and are continuously granulated in a second process stage following thereupon.

**15.** A method according to claim 14, characterized in that mixing is effected by agitating the sludges (51) along with quick lime (30) in a mixing drum and granulation is effected by pelletization by means of at least one pelletizing disc (84) (Fig. 14).

**16.** A method according to claim 14, characterized in that mixing is effected by agitating the sludges (51) along with quick lime (30) in a mixing drum and granulation is effected by extruding the mixed stock, in particular by extruding the mixed stock through a perforated plate (86) (Fig. 15).

**17.** A method according to claim 14, characterized in that mixing is effected by agitating the sludges along with quick lime (30) in a mixing drum and granulation is effected by briquetting (Fig. 16).

**18.** A method according to claim 14, characterized in that the sludges (51) during mixing in the first process stage are kept in a fluidized turbulent three-dimensional state of motion, preferably by rotation of a mixing shaft (61, 61') in a mixing reactor configured as a mixing drum (55), thereby causing the sludges (51) to continuously flow through the mixing drum (55) in the longitudinal direction, optionally under piling up, and that the sludges (51) in the second process stage are granulated by thrust mixing in a randomly oriented manner, preferably in at least one granulation means designed as a granulating drum (72), in which the sludges are agitated by means of a rotating granulation shaft (73), the sludges continuously passing through the granulating drum (72) in the longitudinal direction under increasing formation of granulates (Figs. 3 to 13).

**19.** A method according to one or several of claims 14 to 18, characterized in that a liquid and/or optionally dusts (58) are additionally fed during mixing of the sludges (51) in order to adjust a predetermined moisture of the sludges (51).

**20.** A plant for carrying out the method according to one or several of claims 14 or 18 or 19, characterized by a mixing drum (55) as well as at least one consecutively arranged granulating drum (72) (Figs. 3 to 13).

**21.** A plant according to claim 20, characterized in that the mixing drum (55) is provided with a mixing shaft (61, 61') extending centrally over the length of the mixing drum (55) and equipped with mixing paddles (63), and that rotationally driven cutter heads (67) whose rotational movement differs from the rotational movement of the mixing paddles (63) are additionally provided in the mixing drum (55).

**22.** A plant according to claim 20 or 21, characterized in that the granulating drum (72) is provided with a granulating shaft (73, 61') equipped with granulating paddles (75) and extending centrally along the granulating drum (72).

**23.** A plant according to claim 22, characterized in that the mixing shaft (61, 61') and the granulating shaft (73, 61') are provided with several mixing and granulating blades (63, 75), respectively, which are fastened to radially extending paddles arms (62, 74), and that cutter driving shafts (69) extending approximately radial to the mixing drum (55) project into the mixing drum (55) from outside, which cutter driving shafts in the longitudinal sense of the mixing drum (55) are arranged between the paddle arms (62) and each carry a cutter head (67) comprising at least one cutter (68) extending away from the cutter driving shaft.

**24.** A plant according to claim 23, characterized in that the mixing and granulating paddles (63, 75) are each comprised of a paddle blade whose central axis (65) is inclined forwardly, i.e., in the direction of movement, and upwardly by an angle β of between 20° and 60° relative to the pertaining paddle arm (62) in case of the mixing drum (55) and by an

angle β' smaller than β by about 40 % in case of the granulating drum (72).

**25.** A plant according to claim 24, characterized in that the paddle blade, with its central axis (65) radially projected to the mixing shaft (61) and to the granulating shaft (73), respectively, is arranged to be inclined relative to the mixing shaft (61) by an angle α of between 20° and 60° and relative to the granulating shaft (73) by an angle α' smaller than α by about 35 %.

**26.** A plant according to one or several of claims 20 to 25, characterized in that a weir (71) is each provided in the mixing drum (55) and optionally in the granulating drum (72), near the outlet end for the sludges (51) or granulates (52), respectively.

**27.** A plant according to claim 26, characterized in that the weir (71) is adjustable in height.

**28.** A plant according to one or several of claims 20 to 27, characterized in that the ratio of the internal volume of the mixing drum (55) to the internal volume of the granulating drum (72) ranges between 0.3 and 0.7, preferably amounting to about 0.5.

**29.** A plant according to one or several of claims 20 to 28, characterized in that the filling level of the mixing drum (55) ranges between 30 % and 95 %, preferably between 70 % and 85 %.

**30.** A plant according to one or several of claims 20 to 29, characterized in that the filling level of the granulating drum (72) ranges between 15 and 75 %, preferably is below 40 %.

**31.** A plant according to one or several of claims 20 to 30, characterized in that the mixing drum (55) has a smaller diameter ($D_1$) than the granulating drum (72).

**32.** A plant according to one or several of claims 20 to 31, characterized in that the mixing shaft (61) is drivable at a larger speed than the granulating shaft (73).

**33.** A plant according to one or several of claims 20 to 32, characterized in that the mixing drum (55) is operated at Froude numbers larger than 1, preferably larger than 3.

**34.** A plant according to one or several of claims 20 to 33, characterized in that the granulating drum (72) is operated at Froude numbers smaller than 3.

**35.** A plant according to claims 33 and 34, characterized in that the ratio of the Froude numbers at which the mixing drum (55) and the granulating drum (72) are operated, ranges between 0.5 and 5.

**36.** A plant for carrying out the method according to claim 15, characterized by a mixing drum (55) as well as at least one consecutively arranged pelletizing disc (84) (Fig. 14).

**37.** A plant for carrying out the method according to claim 16, characterized by a mixing drum (55) as well as at least one consecutively arranged extruder (85) preferably provided with a perforated plate (86), in particular a vacuum extruder (Fig. 15).

**38.** A plant for carrying out the method according to claim 17, characterized by a mixing drum (55) and at least one consecutively arranged briquetting press (87) (Fig. 16).

## Revendications

**1.** Procédé de recyclage de poussières produites lors de la réduction de minerai de fer par un gaz de réduction et s'y déposant dans un laveur sous forme de boues, caractérisé par le fait que l'on déshydrate les boues et qu'on les emploie comme matière première pour la fabrication du ciment.

**2.** Procédé selon la revendication 1, caractérisé par le fait qu'avant la poursuite du traitement on déshydrate les boues jusqu'à une teneur en humidité résiduelle de 25 à 50%, de préférence de 35 à 40%.

**3.** Procédé selon la revendication 1 ou 2, caractérisé par le fait,

- que l'on déshydrate tout d'abord les boucs jusqu'à une teneur en humidité résiduelle,
- qu'ensuite on granule les boues et
- qu'on emploie le granulat ainsi formé comme matière première pour la fabrication du ciment.

**4.** Procédé selon la revendication 3, caractérisé par le fait qu'après la déshydratation on ajoute aux boues, comme liant, de la chaux vive (30) ainsi qu'éventuellement de la poussière de charbon et que l'on granule ensuite.

**5.** Procédé selon la revendication 3 ou 4, caractérisé par le fait que l'on broie le granulat pour obtenir une farine crue employée pour la fabrication du ciment, qu'on la sèche et qu'ensuite on la cuit.

**6.** Procédé selon l'une ou plusieurs des revendications 3 à 5, caractérisé par le fait que l'on mélange le granulat à des matières minérales (37, 38) nécessaires pour la fabrication du ciment, comme du calcaire, de l'argile etc., que l'on broie la matière

première pour clinker (40) ainsi formée, qu'on la sèche et qu'ensuite on la cuit.

7. Procédé selon l'une ou plusieurs des revendications 3 à 6, caractérisé par le fait qu'aux boues déshydratées on ajoute de la poussière de charbon dans une proportion allant jusqu'à 30%, de préférence jusqu'à 25%, de la quantité de boues déshydratées.

8. Procédé selon la revendications 1 ou 2, caractérisé par le fait qu'après déshydratation on emploie les boues avec leur humidité résiduelle comme matière première pour la fabrication du ciment et qu'on les mélange avec de la farine crue servant à la fabrication du ciment.

9. Procédé selon la revendication 1 ou 2, caractérisé par le fait que l'on met directement les boues en décharge par pompage ou qu'on les y met après déshydratation jusqu'à une teneur en humidité résiduelle, qu'on les y soumet à un processus de séchage naturel et qu'ensuite, telles qu'elles sont, on les emploie comme matière première pour la fabrication du ciment.

10. Procédé selon la revendication 9, caractérisé par le fait que l'on extrait chaque fois de la décharge la couche supérieure, au moins largement séchée et qu'on l'emploie comme matière première pour la fabrication du ciment.

11. Procédé selon l'une ou plusieurs des revendications 8 à 10, caractérisé par le fait que l'on broie les boues déshydratées, en commun avec la farine crue employée pour la fabrication du ciment, qu'on les sèche et qu'ensuite on les cuit.

12. Procédé selon la revendication 11, caractérisé par le fait qu'on mélange les boues déshydratées, avec des matières minérales nécessaires pour la fabrication du ciment, comme calcaire, argile, etc. et que l'on broie, sèche, puis cuit la matière première pour clinker ainsi formée.

13. Procédé selon l'une ou plusieurs des revendications 1 à 12, caractérisé par le fait que, dans le cas d'un procédé de fabrication d'un bain de fusion du fer au cours duquel on réduit le minerai de fer (4) dans une zone de réduction directe (2) pour donner de l'éponge de fer, on fait fondre l'éponge de fer dans une zone de gazéification pendant fusion (15), avec apport d'un matériau à teneur de carbone, avec gazéification du matériau à teneur de carbone pour donner du gaz de réduction et avec formation de laitier (17), et on envoie le gaz de réduction dans la zone de réduction directe (2), on l'y convertit et on l'en extrait sous forme de gaz de tête, on soumet le gaz de réduction et/ou le gaz de tête à un lavage et on emploie les boues déposées lors du lavage, éventuellement après granulation, comme matière première pour la fabrication du ciment.

14. Procédé selon l'une ou plusieurs des revendications 1 à 13, caractérisé par le fait que l'on traite les boues (51) dans un procédé continu et de façon plus précise que dans une première étape du processus on les mélange en continu avec de la chaux vive (30) et qu'ensuite, dans une seconde étape du processus, on les granule en continu.

15. Procédé selon la revendication 14, caractérisé par le fait que le mélange se fait par déplacement des boues (51) avec de la chaux vive (30) dans un tambour mélangeur et la granulation, par transformation en boulettes au moyen d'au moins un plateau de pelletisation (84) (figure 14).

16. Procédé selon la revendication 14, caractérisé par le fait que le mélange se fait par déplacement des boues (51) avec de la chaux vive (30) dans un tambour mélangeur et la granulation, par extrusion du produit mélangé, en particulier par extrusion du produit mélangé à travers une plaque perforée (86) (figure 15).

17. Procédé selon la revendication 14, caractérisé par le fait que le mélange se fait par déplacement des boues avec de la chaux vive dans un tambour mélangeur et la granulation, par briquetage (figure 16).

18. Procédé selon la revendication 14, caractérisé par le fait que, pendant le mélange, dans la première étape du processus, on maintient les boues (51) dans un état de déplacement tridimensionnel turbulent fluidisé, de préférence par rotation d'un arbre mélangeur (61, 61') dans un réacteur de mélange conçu sous forme d'un tambour mélangeur (55), les boues (51) parcourant en continu le tambour mélangeur (55) suivant sa longueur, éventuellement avec retenue, et que, dans la seconde étape du processus, on granule les boues (51) par mélange par cisaillement du tas, de préférence dans au moins un dispositif de granulation conçu sous forme de tambour de granulation (72) dans lequel les boues se déplacent à l'aide d'un arbre de granulation rotatif (73), les boucs parcourant en continu le tambour de granulation (72) dans le sens de sa longueur et, durant ce temps, se formant progressivement en granulats (52) (figure 3 à 13).

19. Procédé selon un ou plusieurs des revendication 14 à 18, caractérisé par le fait que, pendant le mélange des boues (51), pour prescrire une humidité déterminée des boues (51), on apporte en outre du liquide et/ou éventuellement en outre de la poussière (58).

**20.** Installation pour la mise en oeuvre du procédé selon l'une ou plusieurs des revendications 14 ou 18 ou 19, caractérisée par un tambour mélangeur (55) ainsi que par au moins un tambour de granulation (72) disposé en aval (figures 3 à 13).

**21.** Installation selon la revendication 20, caractérisée par le fait que le tambour mélangeur (55) est prévu avec un arbre mélangeur (61, 61') qui s'étend au centre sur la longueur du tambour mélangeur (55) et qui est équipé de palettes mélangeuses (63) et que dans le tambour mélangeur (55) sont en outre prévues des têtes porte-couteaux (67) qui sont entraînées en rotation et dont le mouvement de rotation est différent du mouvement de rotation des palettes mélangeuses (63).

**22.** Installation selon la revendication 20 ou 21, caractérisée par le fait que le tambour de granulation (72) est muni d'un arbre de granulation (73, 61') qui est muni de palettes de granulation (75) et s'étend au centre le long du tambour de granulation (72).

**23.** Installation selon la revendication 22, caractérisée par le fait que l'arbre mélangeur (61, 61') et l'arbre de granulation (73, 61') sont munis de plusieurs palettes de mélange ou de granulation (63, 75) fixées à des bras de palettes (62, 74) s'étendant radialement en soi et que, dans le tambour mélangeur (55) pénètrent, de l'extérieur, des arbres (69) d'entraînement des couteaux qui s'étendent à peu près radialement par rapport au tambour mélangeur (55), dans le sens de la longueur du tambour mélangeur (55) sont disposés entre les bras de palettes (62) et portent chacun une tête porte-couteaux (67) avec au moins un couteau (68) qui s'étend en s'écartant de l'arbre d'entraînement du couteau.

**24.** Installation selon la revendication 23, caractérisée par le fait que les palettes de mélange ou de granulation (63, 75) sont chacune formées d'une pale dont l'axe géométrique (65) est incliné vers l'avant, c'est-à-dire dans le sens du mouvement, et vers le haut - dans le cas du tambour mélangeur (55) - d'un angle $\beta$ valant entre 20° et 60° par rapport au bras de palette (62) correspondant et - dans le cas du tambour de granulation (72) - d'un angle $\beta'$ qui est environ 40% plus petit que $\beta$.

**25.** Installation selon la revendication 24, caractérisée par le fait qu'en projection radiale de son axe géométrique (65) sur l'arbre mélangeur (61) ou sur l'arbre de granulation (73), la pale est disposée inclinée, par rapport à l'arbre mélangeur (61), d'un angle $\alpha$ valant entre 20° et 60° et, par rapport à l'arbre de granulation (73), d'un angle $\alpha'$ qui est environ 35% plus petit que $\alpha$.

**26.** Installation selon une ou plusieurs des revendications 20 à 25, caractérisée par le fait que dans le tambour mélangeur (55) et éventuellement dans le tambour de granulation (72), un barrage (71) est chaque fois prévu près de l'extrémité de sortie pour les boues (51) ou les granulats (52).

**27.** Installation selon la revendication 26, caractérisée par le fait que le barrage (71) est réglable en hauteur.

**28.** Installation selon une ou plusieurs des revendications 20 à 27, caractérisée par le fait que le rapport entre le volume intérieur du tambour mélangeur (55) et le volume intérieur du tambour de granulation (72) se situe sur une plage entre 0,3 et 0,7, et vaut de préférence environ 0,5.

**29.** Installation selon une ou plusieurs des revendications 20 à 28, caractérisée par le fait que le taux de remplissage du tambour mélangeur (55) se situe entre 30% et 95%, de préférence entre 70% et 85%.

**30.** Installation selon une ou plusieurs des revendications 20 à 29, caractérisée par le fait que le taux de remplissage du tambour de granulation (72) se situe entre 15 et 75%, de préférence en dessous de 40%.

**31.** Installation selon une ou plusieurs des revendications 20 à 30, caractérisée par le fait que le tambour mélangeur (55) a un plus petit diamètre (D1) que le tambour de granulation (72).

**32.** Installation selon une ou plusieurs des revendications 20 à 31, caractérisée par le fait que l'arbre mélangeur (61) peut être entraîné à une vitesse de rotation supérieure à celle de l'arbre de granulation (73).

**33.** Installation selon une ou plusieurs des revendications 20 à 32, caractérisée par le fait que le tambour mélangeur (55) est entraîné avec des indices de Froude supérieurs à 1, de préférence supérieurs à 3.

**34.** Installation selon une ou plusieurs des revendications 20 à 33, caractérisée par le fait que le tambour de granulation (72) est entraîné avec des indices de Froude inférieurs à 3.

**35.** Installation selon les revendications 33 et 34, caractérisée par le fait que le rapport entre les indices de Froude avec lesquels le tambour mélangeur (55) est entraîné et ceux avec lesquels l'est le tambour de granulation (72) se situe entre 0,5 et 5.

**36.** Installation pour la mise en oeuvre du procédé selon la revendication 15, caractérisée par un tambour mélangeur (55) ainsi que par au moins un plateau de pelletisation (84) disposé en aval (figure 14).

**37.** Installation pour la mise en oeuvre du procédé selon la revendication 16, caractérisée par un tambour mélangeur (55) ainsi que par au moins une extrudeuse (85) disposée en aval, munie de préférence d'une plaque perforée (86), en particulier une boudineuse sous vide (figure 15).

**38.** Installation pour la mise en oeuvre du procédé selon la revendication 17, caractérisée par un tambour mélangeur (55) ainsi que par au moins une presse de briquetage (87) disposée en aval (figure 16).

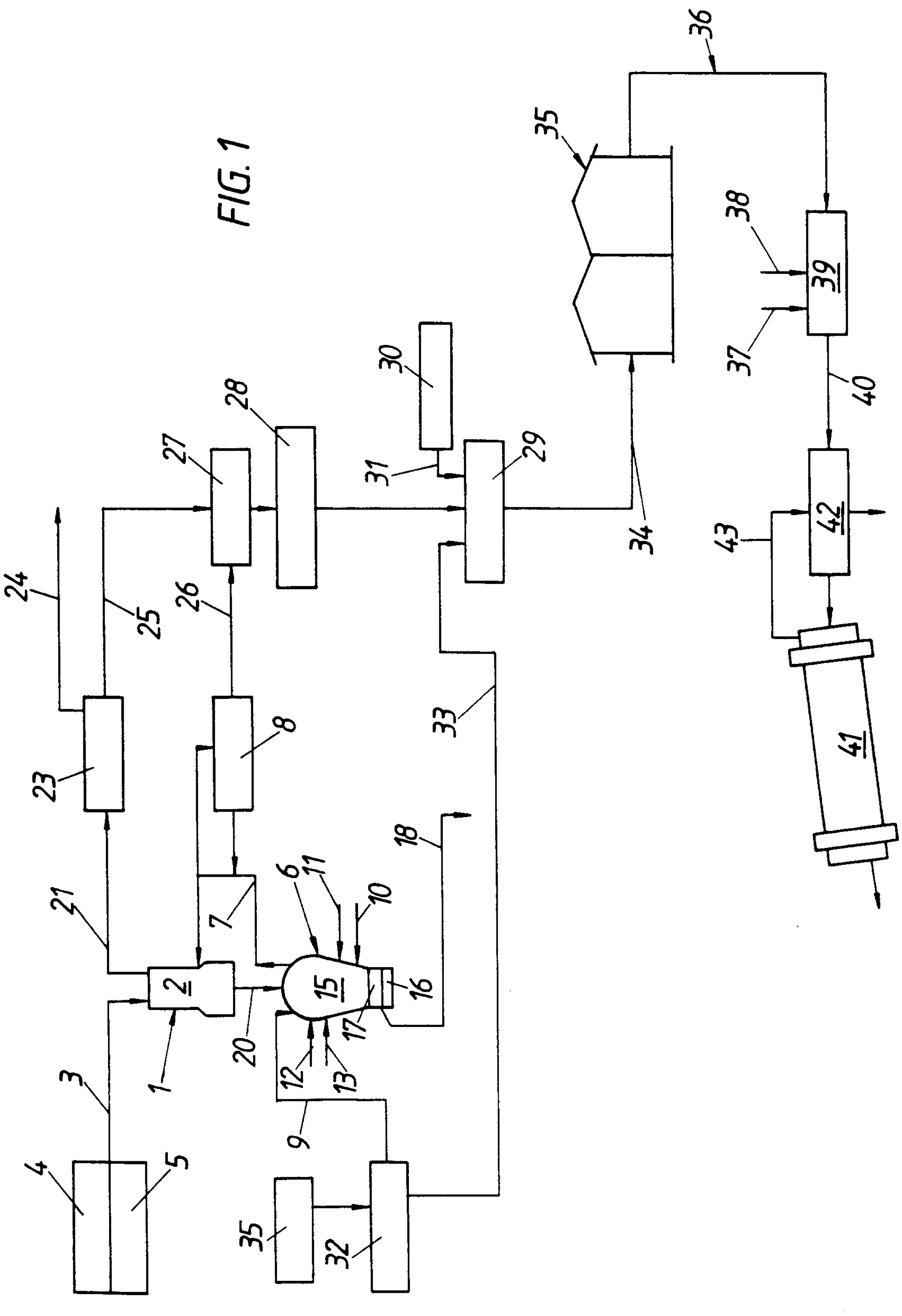
1
2
3
4
5
6
7
8
9
10
11
12
13
15
16
17
18
20
21
23
24
25
26
27
28
29
30
31
32
33
34
35
36
37
38
39
40
41
42
43
FIG. 1

FIG. 2

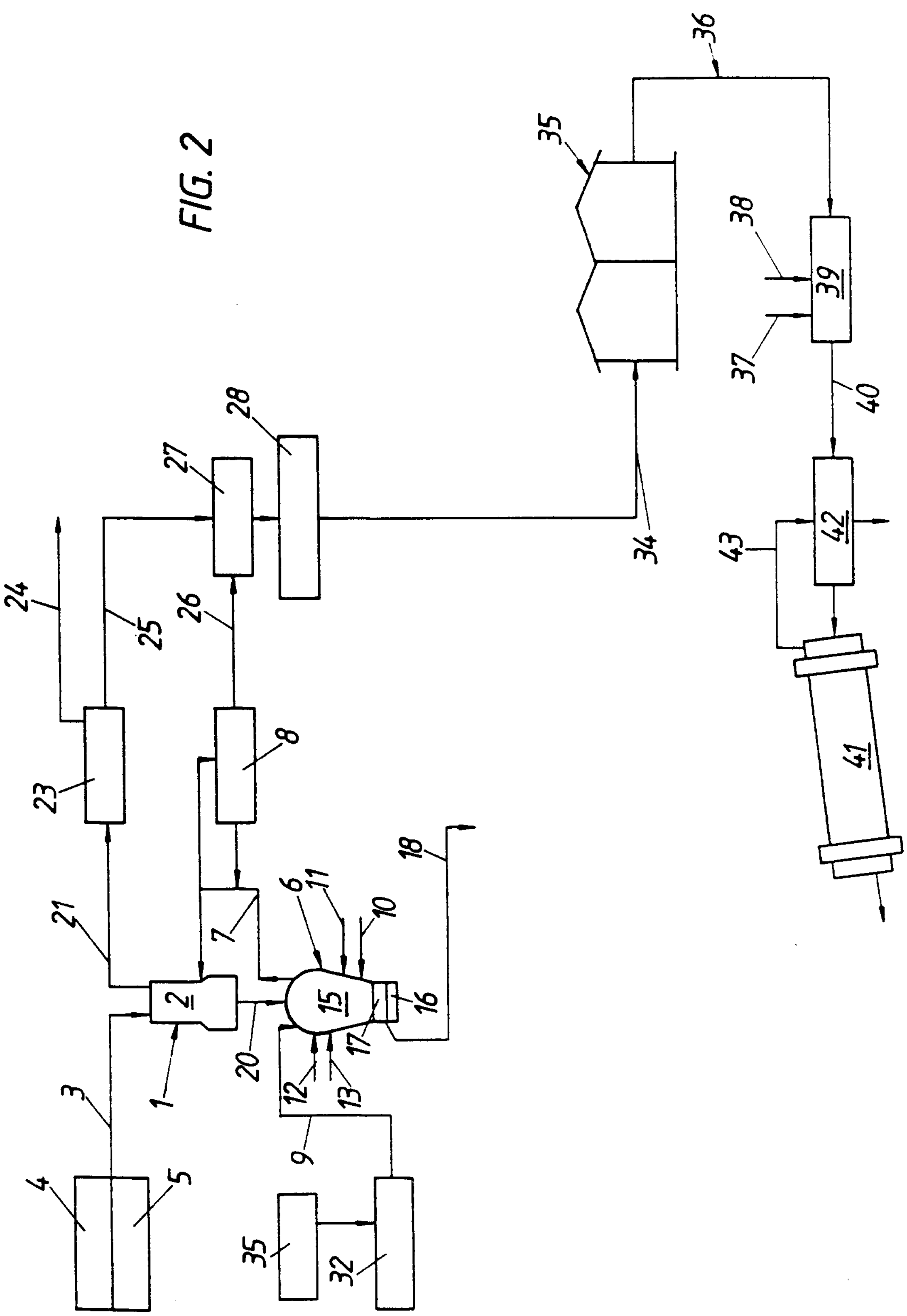
1
2
3
4
5
6
7
8
9
10
11
12
13
15
16
17
18
20
21
23
24
25
26
27
28
32
34
35
36
37
38
39
40
41
42
43

FIG. 3

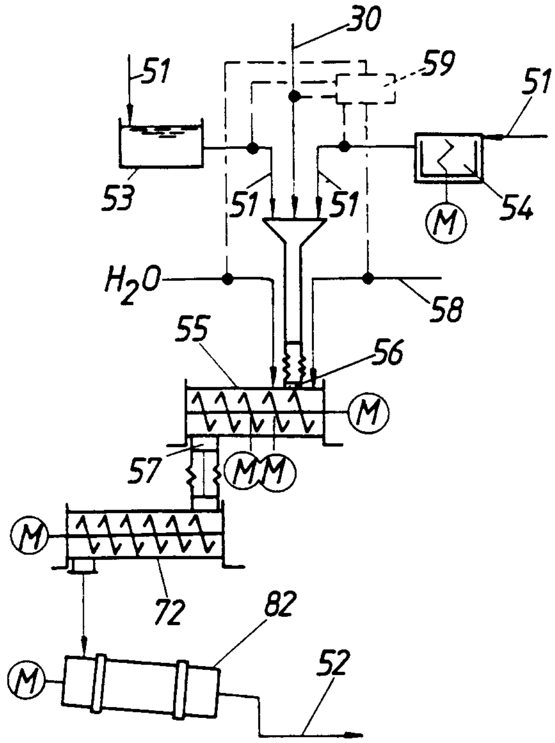


FIG.4

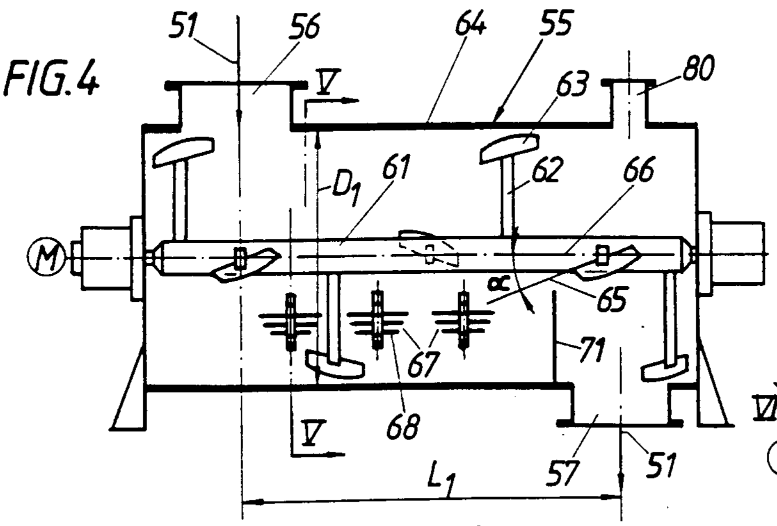


FIG. 5

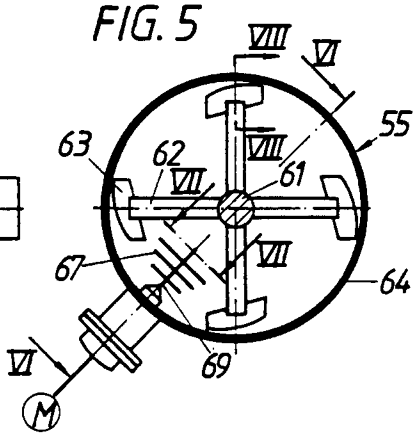


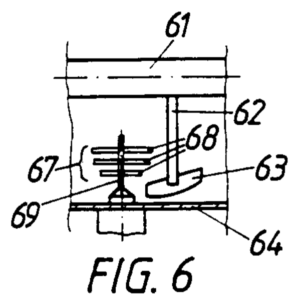


FIG. 6

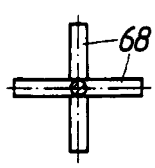


FIG.7

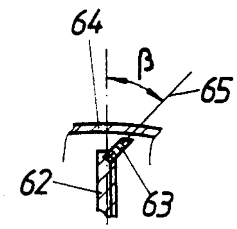


FIG. 8

FIG.9

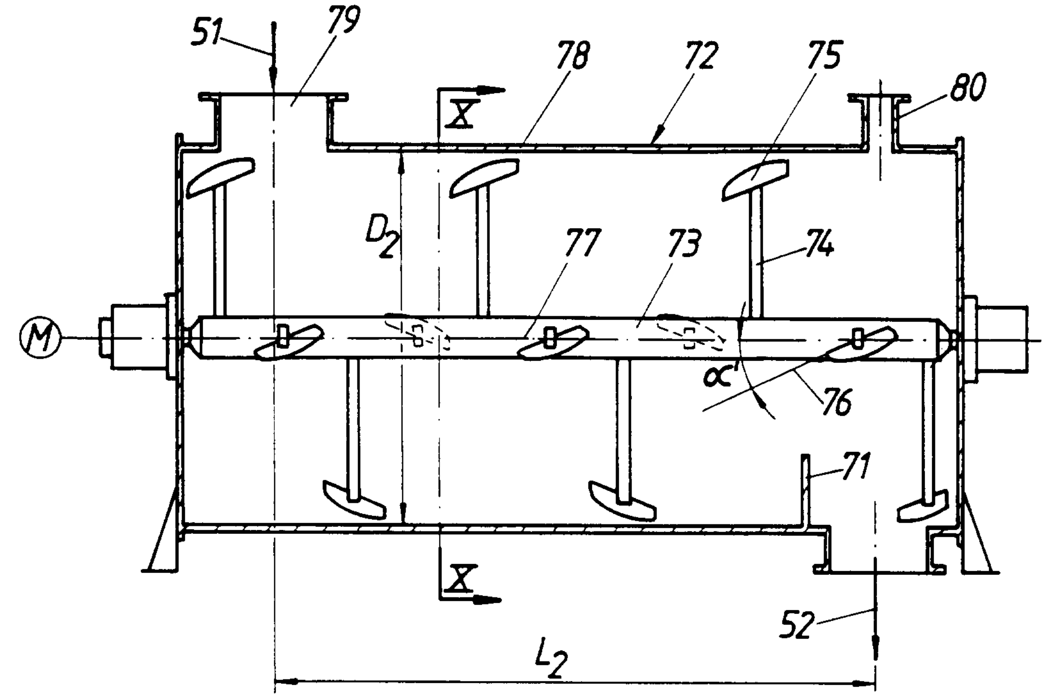


FIG. 11

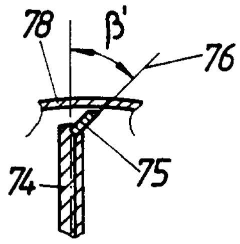


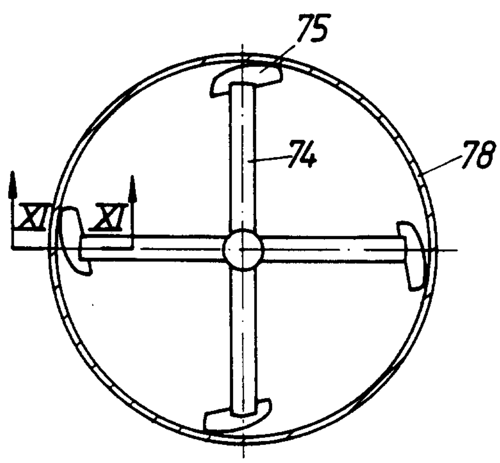


FIG. 10

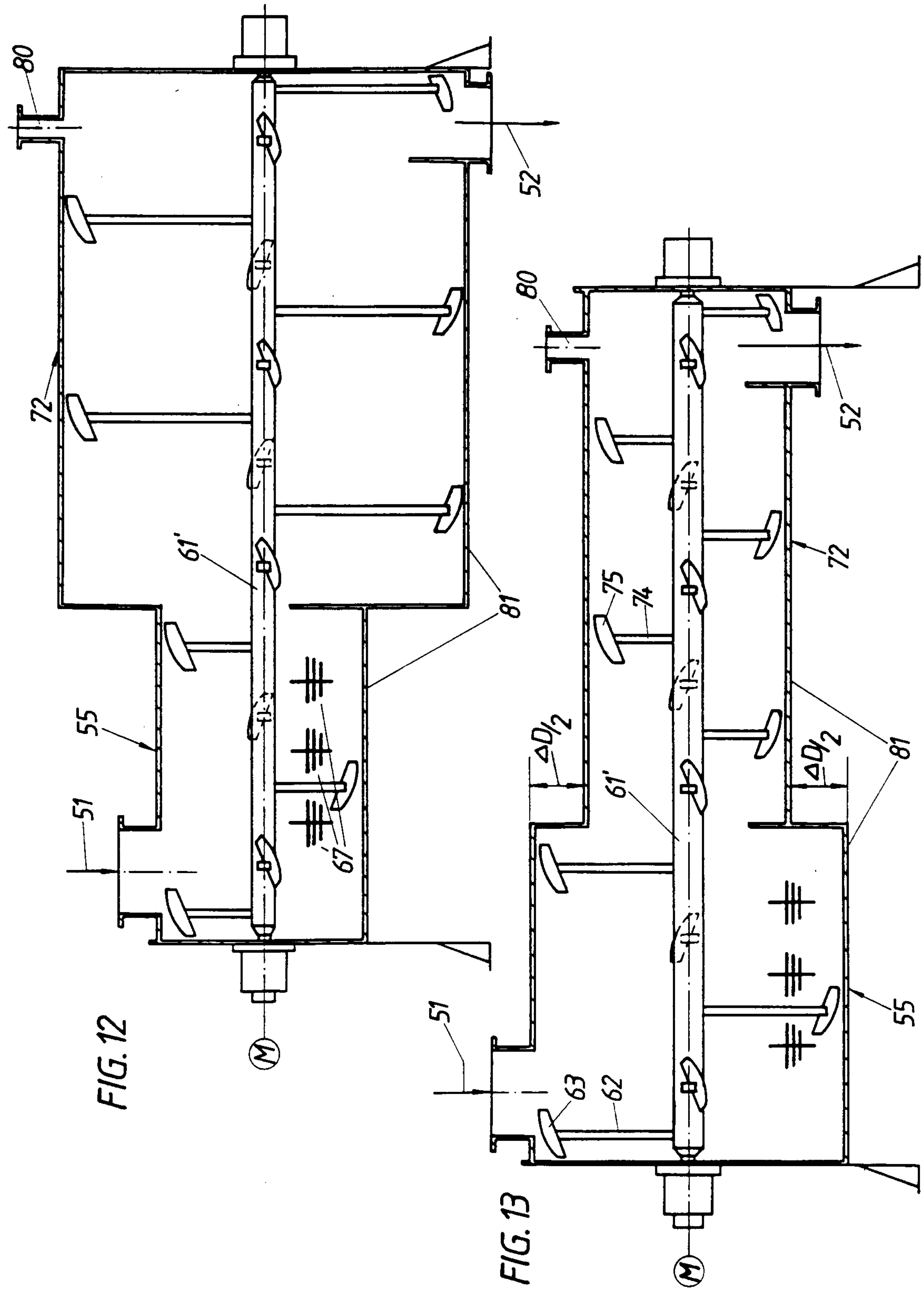


FIG. 12

FIG. 13

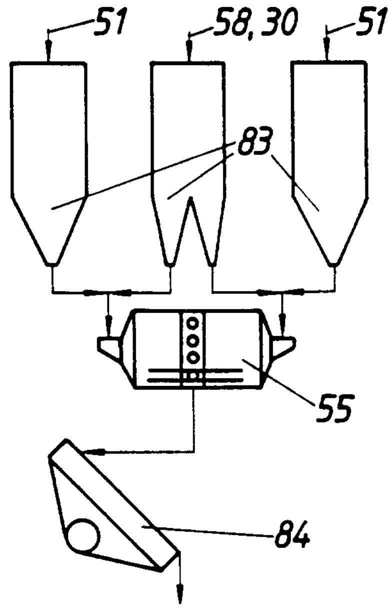


FIG. 14

FIG. 15

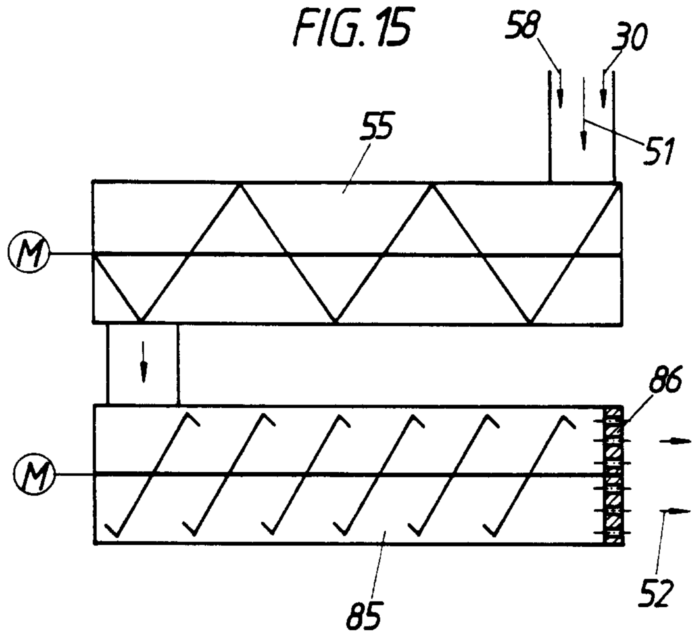


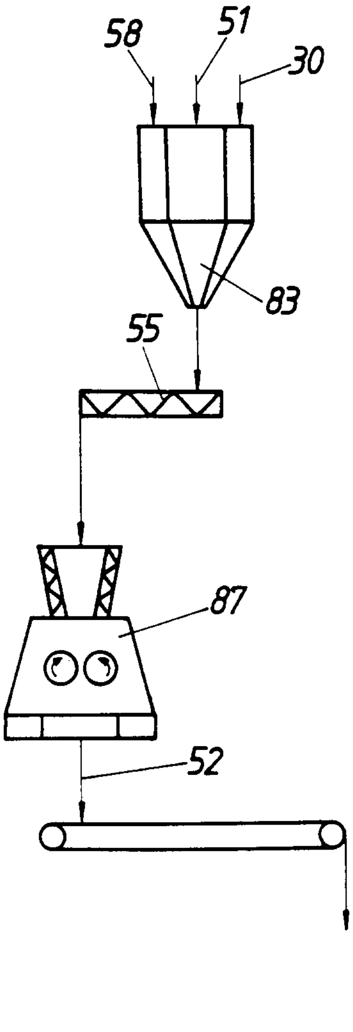


FIG. 16